(19) Europäisches Patentamt
European Patent Office
Office européen des brevets

(11) EP 2 421 661 B1

(12) **EUROPÄISCHE PATENTSCHRIFT**

(45) Veröffentlichungstag und Bekanntmachung des Hinweises auf die Patenterteilung:
**16.07.2014 Patentblatt 2014/29**

(21) Anmeldenummer: **10718872.4**

(22) Anmeldetag: **21.04.2010**

(51) Int Cl.:
***B05D 7/00*** (2006.01) ***B05D 7/14*** (2006.01)
***B05D 7/16*** (2006.01) ***C08G 59/14*** (2006.01)
***C08G 59/50*** (2006.01) ***C08L 63/00*** (2006.01)

(86) Internationale Anmeldenummer:
**PCT/EP2010/002439**

(87) Internationale Veröffentlichungsnummer:
**WO 2010/121799 (28.10.2010 Gazette 2010/43)**

(54) **MEHRSCHICHTLACKIERUNG, EIN VERFAHREN ZU IHRER HERSTELLUNG UND IHRE VERWENDUNG**

MULTILAYER VARNISH, A METHOD FOR THE PRODUCTION THEREOF AND USE THEREOF

VERNIS MULTI-COUCHES, PROCÉDÉ DE PRODUCTION ET UTILISATION ASSOCIÉS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.04.2009 DE 102009018216**

(43) Veröffentlichungstag der Anmeldung:
**29.02.2012 Patentblatt 2012/09**

(73) Patentinhaber: **BASF Coatings GmbH**
**48165 Münster (DE)**

(72) Erfinder:
- **LÖW, Norbert**
  **91413 Neustadt/Aisch (DE)**
- **COOK, Vincent**
  **48163 Münster (DE)**
- **LAVALAYE, Jorn**
  **97082 Würzburg (DE)**

(74) Vertreter: **Leifert & Steffan**
**Patentanwälte**
**Postfach 10 40 09**
**40031 Düsseldorf (DE)**

(56) Entgegenhaltungen:
**WO-A1-2005/046889** **WO-A1-2009/045466**
**WO-A2-2007/044774** **GB-A- 1 481 182**
**US-A- 4 281 075** **US-A- 4 504 372**
**US-A- 5 552 184** **US-A1- 2003 190 434**
**US-B1- 6 204 332**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 421 661 B1

Printed by Jouve, 75001 PARIS (FR)

## Beschreibung

### Gebiet der Erfindung

Die vorliegende Erfindung betrifft Mehrschichtlackierungen, ein Verfahren zu ihrer Herstellung, ihre Verwendung sowie Substrate, die mit diesen Mehrschichtlackierungen lackiert sind.

### Stand der Technik

Die seit langem bekannten lösungsmittelhaltigen Beschichtungsstoffe, insbesondere die sogenannten Basislacke und Klarlacke und die hiermit hergestellten ein- oder mehrschichtigen farb- und/oder effektgebenden Lackierungen weisen sehr gute anwendungstechnische Eigenschaften auf.

Die stetig wachsenden technischen und ästhetischen Ansprüche des Marktes, insbesondere die Ansprüche der Automobilhersteller und ihrer Kunden, erfordern aber eine stetige Weiterentwicklung des bisher erreichten technischen und ästhetischen Niveaus.

Insbesondere müssen neue Beschichtungsmittel zur Verfügung gestellt werden, die es gestatten, Mehrschichtlackierungen herzustellen, die beim Einbrennen keine bzw. nur geringe Vergilbungstendenzen, insbesondere unter Überbrennbedingungen, aufweisen. Dabei sollen aber die durch die bekannten Basis- und Klarlacke und die hieraus hergestellten Mehrschichtlackierungen erzielten Vorteile nicht verloren gehen, sondern zumindest in der gleichen, vorzugsweise einer stärkeren, Ausprägung erhalten bleiben.

Mehrschichtlackierungen, bestehend aus Basislack und Klarlack, sind in der Automobilindustrie weit verbreitet. Sie werden wegen ihrer hervorragenden Eigenschaftsprofile, wie Kratz-, Chemikalien- und Wetterbeständigkeit, sowie hohem Glanz eingesetzt. Aus Gründen des Umweltschutzes müssen ferner Beschichtungsmittel mit einem immer niedrigeren Lösemittelgehalt und somit einem immer höheren Festkörpergehalt zur Verfügung gestellt werden (sogenannte High Solids, kurz HS).

Festkörperreiche Klarlacke, die die Grenzen für flüchtige organische Bestandteile (VOC) einhalten und die vom Kunden geforderte hohe Kratzbeständigkeit besitzen, basieren überwiegend auf Carbamat-haltigen Bindemittelsystemen, die in Kombination mit monomeren Vernetzungsharzen wie Hexa(methoxymethyl)melamin (HMMM) oder gemischtveretherten Melaminen und polymerisierten Bindemitteln ein dichtes Netzwerk bilden. Unter die flüchtigen organischen Bestandteile fallen die Lösemittel sowie flüchtige Abspaltprodukte aus Filmbildreaktionen (vgl. Römpp Lexikon Lacke und Druckfarben, Georg Thieme Verlag Stuttgart/New York 1998, ISBN 3-13-776001-1, Seite 612, Stichwort "Volatile organic compounds" (VOC)).

Die Basislacke in den Mehrschichtlackierungen enthalten üblicherweise ein Bindemittel und ein Vernetzungsmittel. Das Bindemittel besitzt häufig Hydroxyfunktionelle Gruppen an einem polymeren Netzwerk. Als Vernetzungsmittel werden üblicherweise monomere Vernetzungsharze wie Hexa(methoxymethyl)melamin (HMMM) oder gemischt-veretherte Melamine eingesetzt.

Die Basis- und Klarlacke mit monomeren Melaminharzen als Vernetzungsmittel enthalten zusätzlich starke Säure-Katalysatoren, wodurch die Vernetzung der monomeren Bausteine gewährleistet wird. Als Säure-Katalysatoren werden dabei aromatische Sulfonsäure (z.B. para-Toluensulfonsäure pTSA, Dinonylnaphthalensulfonsäure DNNSA, Dodecylbenzolsulfonsäure DDBNS), Phenylphosphatsäure, Butylphosphat- und Hydroxyphosphatester eingesetzt. Die Säure-Katalysatoren werden überwiegend mit einer Amin-Gruppe blockiert, wodurch die Stabilität und die Haltbarkeit der Lacksysteme gewährleistet werden. Es werden gewöhnlich tertiär alkylierte oder heterocyclische Amine verwendet, wie 2-Amino-2-methylpropanol, Diisopropanolamin, Dimethyloxazolidin, Trimethylamin etc. Das Amin bildet dabei mit dem Säure-Katalysator einen Komplex, wodurch die vorzeitige Reaktion zwischen Bindemittel und Melamin verhindert wird. Beim Einbrennen des Mehrschicht-Systems dissoziiert der Amin-Komplex, wodurch die Säurefunktionalität des Katalysators freigesetzt wird und als Protonen-Donor die Melamin-Bindemittel-Reaktion katalysiert.

Mehrschichtlackierungen werden dadurch hergestellt, dass nach Vorlackierung eines pigmentierten Basislackes und kurzer Ablüftzeit ohne Einbrennschritt (Nass-in-Nass-Verfahren) ein Klarlack überlackiert wird und anschließend Basislack und Klarlack zusammen eingebrannt werden.

Bei den neuartigen 3-Wet-Beschichtungs-Verfahren wird ein Basislack als Primer-Ersatz lackiert. Nach kurzer Ablüftzeit wird ein pigmentierter Basislack und nach wiederholter kurzer Ablüftzeit ohne Einbrennschritt (Nass-in-Nass-in-Nass Verfahren) ein Klarlack überlackiert. Anschließend werden alle drei Schichten (Basislack I + II und Klarlack) gemeinsam eingebrannt. Beispiele für 3-Wet-Verfahren sind in der WO 2006/062 666 A1 und der Anmeldung EP 1940977 beschrieben.

Sowohl im Nass-in-Nass-Verfahren als auch im Nass-in-Nass-in-Nass-Verfahren kann es zur Vergilbung mindestens einer der Schichten, überwiegend der oberen Schichten, kommen.

Insbesondere bei Überbrennung von Mehrschichtlackierungen, was in der Serienlackierung jederzeit auftreten kann, kommt es zum Phänomen der Vergilbung. Nach DIN 6167:1980-01 spricht man von Vergilbung, wenn beim

betreffenden Material ein nennenswerter Gelbwert festzustellen ist, wie etwa bei weißen, hell getönten, aber auch farbigen hoch- und seidenglänzenden Lackierungen, und zwar auf Grund von Einflüssen wie Strahlung, Temperatur, Feuchtigkeit und chemischen Reaktionen (Römpp Lexikon Lacke und Druckfarben, Seite 601, Stichwort "Vergilbung").

Überbrennen ist eine Bezeichnung für das Einbrennen eines Beschichtungsstoffes mit höherer Energiezufuhr (Einbrennzeit und/oder -temperatur werden überschritten) als für eine vollständige Vernetzung notwendig ist (Römpp Lexikon Lacke und Druckfarben, Seite 585, Stichwort "Überbrennen").

Aus dem U.S. Pat. No. 5.288.820 ist es bekannt, dass durch Reaktion eines Amins mit einer Acetoacetat-Gruppe und einer Aldehyd-Gruppe Dihydropyridin-Derivate entstehen, welche bekanntlich sehr stark gelb gefärbt sind.

U.S. Pat. No. 4.369.301 beschreibt einen 2K-Polyurethanharz mit Hydrazid-Gruppen, durch die die Vergilbung reduziert wird.

In U.S. Pat. No. 5.112.931 werden Hydrazid-Gruppen verwendet, um die Vergilbung in 1 K-Acrylaten mit blockierten Polyisocyanat-Lacken zu reduzieren.

Das Vergilben der Mehrschichtlackierung bspw. auf der Stahlkarosse ist extrem unerwünscht, da in einem späteren Prozess die Kunststoff-Anbauteile an die Karosse montiert werden, wodurch es zu Problemen bezüglich Farbtonkonstanz (Color Harmony) kommt.

In dem europäischen Patent EP 0377931 B1 werden Sulfonsäure-Verbindungen für Farben und Beschichtungsmittel, vor allem Klarlacke beschrieben, die für Elektrospray-Applikationen geeignet sind und eine hohe Lagerstabilität aufweisen. Bei der Lagerung dieser Mittel tritt eine Entfärbung weniger stark auf.

Heutzutage benötigen lösungsmittelhaltige High-Solid-Beschichtungsmittel den Einsatz von niedrig-viskosen Bindemitteln, sowie wenig reaktiven Melaminbasierenden Vernetzungsharzen.

Damit bei erniedrigten Einbrenntemperaturen bzw. verkürzten Einbrennzeiten aus den oligomeren Einsatzbestandteilen ein polymeres, chemisch resistentes Netzwerk entstehen kann, ist die Verwendung von Katalysatoren notwendig. Dabei können Acrylate, Polyurethane und Polyester mit reaktiven funktionellen Gruppen wie zum Beispiel Hydroxyl-, Carbamat- oder Amin-Gruppen mit Melamin-Harnstoffen vernetzen. Die Auswahl geeigneter Katalysatoren kann sich in verkürzter Einbrennzeit, niedriger Einbrenntemperatur, verbesserten Haftungseigenschaften, sowie größerer Robustheit gegenüber Vergilbungsreaktionen auswirken. Der Einsatz neuer gewichtssparender Materialien wie Aluminium oder Kunststoff im Fahrzeugbau führt zu unterschiedlichen Aufheizprofilen dieser Materialien. Starke Temperaturschwankungen auf Grund unterschiedlichen Wärmetransports der Materialien können insbesondere bei ungewollten Überbrennungen zu starker Vergilbung bei hellen Uni- bzw. Metallic-Mehrschichtlackierungen führen. High-Solid-Basis- und Klarlacke bestehen üblicherweise aus monomeren Vernetzungsharzen wie Hexa(methoxymethyl)melamin (HMMM) oder gemischt-veretherten Melaminen. Die Vernetzungsreaktion mit Hydroxy- oder Carbamatfunktionellen Gruppen erfolgt am besten mit starken Säure-Katalysatoren wie Dodecylbenzylsulfonsäure (DDBSA), Dinonylnaphthalensulfonsäure (DNNSA) oder para-Toluolsulfonsäure (p-TSA). Reaktivere polymere Vernetzungsharze mit einem hohen Gehalt an NH-Gruppen reagieren besser mit blockierten Katalysatoren.

Für High-Solid-Lacke ist eine starke Viskositätsänderung bei Lagerung unerwünscht, da man für die Verarbeitung dieser Materialien hohe Lösungsmitteleinstellzusätze benötigen würde. Dies ist mit einer starken Reduktion des Festkörpers verbunden, was einen erhöhten VOC-Wert zur Folge hätte.

**Aufgabe**

Der vorliegenden Erfindung lag die Aufgabe zugrunde, die zuvor beschriebenen Nachteile des Standes der Technik zu beseitigen. Es sollten Mehrschichtlackierungen auf Basis von festkörperreichen Basis- und Klarlacken zur Verfügung gestellt werden, die insbesondere beim Überbrennen geringere Vergilbungsreaktionen aufweisen als die Mehrschichtlackierungen des Standes der Technik. Gleichzeitig sollten die festkörperreichen Basis- und Klarlacke eine gute Lagerstabilität, insbesondere keinen Viskositätsanstieg, aufweisen. Dadurch sollten die Lacke nach der Lagerung eine Viskosität aufweisen, durch die sich die Lacke ohne weitere Lösemittelzugabe, beispielsweise durch Spritzapplikation, applizieren lassen.

Demzufolge war eine Mehrschichtlackierung zu finden, welche sich aus festkörperreichen Basis- und Klarlacken zusammensetzt und bei der eine Balance zwischen geringer Vergilbung der Lackierung und einer guten Lagerstabilität der Lacke herrscht.

Darüber hinaus sollten die durch die bekannten High-Solid-Basis- und Klarlacke und die hieraus hergestellten Basis- bzw. Klarlackierungen erzielten Vorteile wie guter Verlauf, geringe Stippenbildung und hohe Farbkonstanz nicht verloren gehen, sondern zumindest in der gleichen, vorzugsweise einer stärkeren Ausprägung erhalten bleiben. Die Lackierungen sollten zudem eine gute Haftung aufweisen.

Die resultierende Mehrschichtlackierung sollte insbesondere keinen oder einen möglichst geringen Glanzschleier (Haze) und einen sehr guten optischen Gesamteindruck (Appearance) aufweisen. Ferner sollten die Mehrschichtlackierungen frei von Lackstörungen wie Rissbildungen (Mudcracking), Hell-Dunkel-Schattierungen (Wolken) und Stippen sein. Darüber hinaus sollten die Mehrschichtlackierungen keine optischen Fehlstellen wie z.B. Schleifflecken

zeigen.

Weiterhin sollte ein Verfahren zur Herstellung dieser Mehrschichtlackierungen zur Verfügung gestellt werden.

Darüber hinaus sollten Substrate aus Metall und/oder Kunststoff bereitgestellt werden, die mit der Mehrschichtlackierung beschichtet sind.

**Lösung der Aufgabe**

Überraschenderweise wurden Mehrschichtlackierungen gefunden, bei denen geringere Vergilbungen, insbesondere beim Überbrennen, bei gleichzeitig guter Lagerstabilität der High-Solid-Basis- und High-Solid-Klarlacke auftreten (im Folgenden erfindungsgemäße Mehrschichtlackierungen genannt).

Die erfindungsgemäßen Mehrschichtlackierungen umfassen

i. mindestens eine Basislackierung eines nicht-wässrigen Basislacks mit einem Festkörperanteil von mindestens 35 Gew.-%, bezogen auf das Gesamtgewicht des Basislacks, und

ii. mindestens eine Klarlackierung eines nicht-wässrigen Klarlacks mit einem Festkörperanteil von mindestens 50 Gew.-%, bezogen auf das Gesamtgewicht des Klarlacks,

die dadurch gekennzeichnet sind, dass in dem Basislack und dem Klarlack je 0,5 bis 3,0 Gew.-%, bezogen auf das Gesamtgewicht des jeweiligen Lacks,

A. mindestens einer Epoxy-Sulfonsäureverbindung der Formel (I)

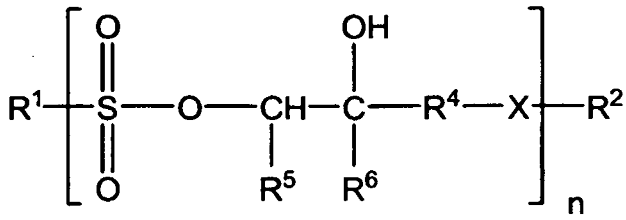

(I),

worin

n 1 bis 10 ist,

$R^1$ einen mono- oder divalenten Alkyl- oder Alkylenrest mit 1 bis 18 C-Atomen oder einen mit je 1 bis 18 C-Atomen mono- oder dialkylierten Phenyl- oder Naphthyl-Rest darstellt,

$R^5$ und $R^6$ unabhängig voneinander ein Wasserstoffatom oder einen Alkylrest mit 1 bis 12 C-Atomen oder $R^5$ und $R^6$ zusammen einen Cycloalkylrest mit 6 bis 12 C-Atomen darstellen,

sowie entweder

a. $R^4$ ein Wasserstoffatom bedeutet und $R^2$ und X entfallen, oder

b. $R^4$ einen Methylen-Rest,

$R^2$ ein Wasserstoffatom, einen mono- oder multivalenten Alkylrest mit 1 bis 18 C-Atomen, einen Bisphenol A- oder Bisphenol F-Rest, wobei die Reste substituiert sein können, und

X eine Carbonylgruppe oder ein Sauerstoffatom bedeuten, wobei X optional ist,

wobei die Verbindung nach Formel (I) ein zahlenmittleres Molekulargewicht von 350 bis 2000 g/mol aufweist und bei n > 1 mindestens einer der Reste $R^1$ oder $R^2$ mindestens divalent ist, oder

B. mindestens einer Epoxy-Isocyanat-blockierten Sulfonsäureverbindung der Formel (II)

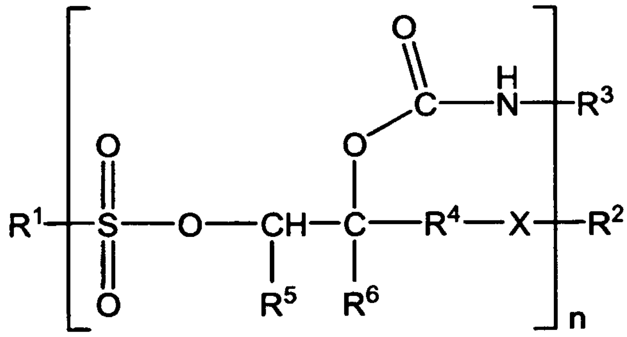

(II),

worin $R^1$, $R^2$, $R^4$, $R^5$, $R^5$, X und n die gleiche Bedeutung wie in der Verbindung der Formel (I) haben und

$R^3$ ein Alkyl-, Alkenyl-, Cycloalkyl- oder Aryl-Rest mit 1 bis 18 C-Atomen oder ein Polymerrest ist, wobei $R^3$ substituiert sein kann, ist,

wobei bei n > 1 mindestens einer der Reste $R^1$, $R^2$ oder $R^3$ mindestens divalent ist, wobei die Verbindung nach Formel (II) ein zahlenmittleres Molekulargewicht von mindestens 1000 g/mol aufweist,

enthalten ist.

Besonders überraschend hierbei war, dass beim Überbrennen vor allem dann eine deutliche Verringerung der Vergilbung bei gleichzeitig guter Lagerstabilität der Lacke auftritt, wenn sowohl im Klar- als auch im Basislack mindestens je eine Sulfonsäure-Verbindung nach Formeln (I) und/oder (II) vorhanden ist.

Darüber hinaus zeigen die Basis- bzw. Klarlackierungen einen guten Verlauf, geringe Stippenbildung und eine hohe Farbkonstanz sowie eine gute Haftung.

Die erfindungsgemäßen Mehrschichtlackierungen weisen einen guten Haze und einen sehr guten optischen Gesamteindruck auf. Zudem sind die Mehrschichtlackierungen frei von Lackstörungen wie Rissbildungen (Mudcracking), Hell-Dunkel-Schattierungen (Wolken) und Stippen. Darüber hinaus zeigen die Mehrschichtlackierungen keine optischen Fehlstellen.

Sulfonsäure-Verbindungen der Formel (II) werden detailliert in dem europäischen Patent EP 0377931 B1 beschrieben. Sulfonsäure-Verbindungen der Formel (I) werden bei der Herstellung der Verbindungen der Formel (II) ebenfalls in dem europäischen Patent EP 0377931 B1 beschrieben.

Der Rest $R^3$ ist ein - optional substituierter - Alkyl-, Alkenyl-, Cycloalkyl- oder Aryl-Rest mit 1 bis 18 C-Atomen oder ein Polymerrest. Der Polymerrest $R^3$ kann auch Ester-, Ether-, Isocyanat- und/oder Isocyanat-basierte Gruppen tragen. Als Polymerreste $R^3$ kommen beispielsweise Reste $R^3$ in Frage, die bei Umsetzung einer Verbindung der Formel (I) mit einem Isocyanat OCN-$R^3$ als Reste $R^3$ in der Formel (II) erhalten werden. Geeignete Isocyanate OCN-$R^3$ sind beispielsweise Hexamethylendiisocyanat (HDI), Trimethylhexandiisocyanat, Isophorondiisocyanat (IPDI), Toluylendiisocyanat (TDI), Methylen-Dianilin-basierte Diisocyanate wie beispielsweise Diphenylmethan-4,4'-diisocyanat, Bis(4-isocyanatocyclohexyl)methan oder Tetramethylxyloldiisocyanat; Polyester oder Polyether mit einer endständigen Isocyanatgruppe, wie beispielsweise das Reaktionsprodukt aus einem Mol eines Polypropylenglykols mit zwei Molen Isophorondiisocyanat, oder das Reaktionsprodukt eines Polyesterdiols aus Neopentylglykol und Adipinsäure mit einem Überschuss an Isophorondiisocyanat.

Die Basislacke, die in der erfindungsgemäßen Mehrschichtlackierung mit einem Festkörperanteil von mindestens 35 Gew.-% umfasst sind, werden im Sinne dieser Erfindung auch als High-Solid-Basislacke beschrieben. Analog werden die Klarlacke mit einem Festkörperanteil von mindestens 50 Gew.-% als High-Solid-Klarlacke bezeichnet. Der Festkörperanteil der Basis- und Klarlacke wird nach DIN ISO 3251 mit einer Einwaage von 1,0 g bei einer Prüfdauer von 60 min bei einer Temperatur von 125 °C durchgeführt.

Gegenstand der vorliegenden Erfindung ist außerdem ein Verfahren zur Herstellung der Mehrschichtlackierungen. Darüber hinaus betrifft die Erfindung auch die Verwendung von Sulfonsäureverbindungen der Formeln (I) und/oder (II) als Katalysatoren in nicht-wässrigen High-Solid-Basis- und nicht-wässrigen High-Solid-Klarlacken für die Herstellung der erfindungsgemäßen Mehrschichtlackierungen. Schließlich betrifft die Erfindung Substrate aus Metall und/oder Kunststoff, die mit der erfindungsgemäßen Mehrschichtlackierung beschichtet sind.

## Ausführliche Beschreibung der Erfindung

Die bevorzugten Ausführungsformen dieser Erfindung werden durch die Unteransprüche beschrieben.

Die erfindungsgemäße Mehrschichtlackierung umfasst mindestens eine Basislackierung eines nicht-wässrigen Basislacks mit einem Festkörperanteil von mindestens 35 Gew.-%, bezogen auf das Gesamtgewicht des Basislacks,

und mindestens eine Klarlackierung eines nicht-wässrigen Klarlacks mit einem Festkörperanteil von mindestens 50 Gew.-%, bezogen auf das Gesamtgewicht des Klarlacks, dadurch gekennzeichnet, dass in dem Basislack und dem Klarlack je 0,5 bis 3,0 Gew.-%, bezogen auf das Gesamtgewicht des jeweiligen Lacks, mindestens einer Epoxy-Sulfonsäure-Verbindung der Formel (I) oder mindestens einer Epoxy-Isocyanat-blockierte Sulfonsäure-Verbindung der Formel (II) enthalten ist.

Der oder die Basislacke sowie der oder die Klarlacke der erfindungsgemäßen Mehrschichtlackierung werden auch als Beschichtungsmittel der erfindungsgemäßen Mehrschichtlackierung bezeichnet.

Die erfindungsgemäßen Mehrschichtlackierungen können auch aus High-Solid-Basis- und High-Solid-Klarlacken aufgebaut sein, die unabhängig voneinander mindestens eine Verbindung der Formel (I) und mindestens eine Verbindung der Formel (II) enthalten.

Vorzugsweise enthalten die Basis- und/oder Klarlacke der erfindungsgemäßen Mehrschichtlackierungen, jeweils unabhängig voneinander, je 1,5 bis 3,0 Gew.-%, bevorzugt 1,8 bis 2,7 Gew.-%, mindestens einer Verbindung nach Formel (I) und/oder Formel (II).

Die Verbindung der Formel (I) weist ein zahlenmittleres Molekulargewicht von 350 bis 2000 g/mol, bevorzugt von 500 bis 1800 g/mol, auf. Verbindungen der Formel (II) haben vorzugsweise ein zahlenmittleres Molekulargewicht von 1000 bis 4000 g/mol, bevorzugt von 1000 bis 3000 g/mol. Das zahlenmittlere Molekulargewicht wird mittels Gelpermeationschromatographie nach DIN 55672-1 (Ausgabe 2007-08) für THFlösliche Polymere unter Verwendung von Tetrahydrofuran als Elutionsmittel bestimmt. Die Kalibrierung erfolgt mittels Polystyrol-Standards.

Vorteilhafterweise enthält ein Beschichtungsmittel der erfindungsgemäßen Mehrschichtlackierung mindestens eine Verbindung der Formeln (I) oder (II) mit n gleich 1 bis 5, bevorzugt mit n = 1. Besonders vorteilhafterweise enthält mindestens ein Basis- und mindestens ein Klarlack der erfindungsgemäßen Mehrschichtlackierung mindestens je eine Verbindung der Formel (I) oder (II) mit n gleich 1 bis 5, bevorzugt n = 1.

In einer weiteren, bevorzugten Ausführungsform ist $R^1$ in den Verbindungen der Formel (I) und (II) ein para-Methylphenyl-Rest, ein Dodecylphenyl-Rest oder ein Dinonylnaphthyl-Rest. Besonders bevorzugt sind para-Methylphenyl- und Dodecylphenyl-Reste.

In einer bevorzugten Ausführungsform enthält der Basislack der erfindungsgemäßen Mehrschichtlackierung zusätzlich

a. 15 - 50 Gew.-% mindestens eines Bindemittels,
b. 5 - 30 Gew.-% mindestens eines Melaminharz-Derivats als Vernetzungsmittel,
c. 0,5 - 49 Gew.-% mindestens eines Farbmittels,
d. 30 - 65 Gew.-% mindestens eines organischen Lösemittels,
e. 0,05 - 40 Gew.-% mindestens eines Hilfs- oder Zusatzstoffs,

jeweils bezogen auf das Gesamtgewicht des Basislacks, wobei sich die Gewichtsanteile aller Bestandteile des Basislacks zu 100 % addieren.

Der Basislack der erfindungsgemäßen Mehrschichtlackierung enthält als Zusatzstoff vorzugsweise mindestens einen Bestandteil, der ausgewählt ist aus der Gruppe der Polymermikroteilchen, der anorganischen Teilchen, der Wachse und der wachsartigen Verbindungen.

In einer bevorzugten Ausführungsform enthält der Klarlack der erfindungsgemäßen Mehrschichtlackierung zusätzlich

a. 15 - 50 Gew.-% mindestens eines Bindemittels,
b. 5 - 30 Gew.-% mindestens eines Melaminharz-Derivats als Vernetzungsmittel,
c. 30 - 50 Gew.-% mindestens eines organischen Lösemittels,
d. 0,05 - 40 Gew.-% mindestens eines Hilfs- oder Zusatzstoffs,

jeweils bezogen auf das Gesamtgewicht des Klarlacks, wobei sich die Gewichtsanteile aller Bestandteile des Klarlacks zu 100 % addieren. Der Klarlack der erfindungsgemäßen Mehrschichtlackierung kann darüber hinaus Katalysatoren, wie beispielsweise handelsübliche Zinnkatalysatoren und/oder Phosphorsäurekatalysatoren, enthalten.

Die erfindungsgemäßen Mehrschichtlackierungen sind üblicherweise so aufgebaut, dass auf ein Substrat zunächst eine Grundierung und ggf. ein Füller aufgetragen worden ist. Darüber befindet sich mindestens eine Basislackierung eines Basislacks der erfindungsgemäßen Mehrschichtlackierung und darüber mindestens eine Klarlackierung eines Klarlacks der erfindungsgemäßen Mehrschichtlackierung.

Die Substrate sind üblicherweise mit einer Grundierung und ggf. einem Füller versehen, die mit den üblichen Verfahren, wie Elektrotauchlackierung, Tauchen, Rakeln, Spritzen, Walzen o. ä., appliziert werden. Bevorzugt wird die Grundierung zumindest teilweise oder vollständig ausgehärtet, ehe Basis- und Klarlack appliziert werden. Die Aushärtung der Grundierung bzw. des Füllers erfolgt üblicherweise durch Erhitzen auf eine Temperatur zwischen 80 und 170 °C für

eine Zeit von 3 bis 30 min.

Die erfindungsgemäße Mehrschichtlackierung wird vorzugsweise auf Substrate aus Metall und/oder Kunststoff aufgebracht.

Auf die Grundierung bzw. die Füllerschicht werden mindestens ein Basislack und mindestens ein Klarlack der erfindungsgemäßen Mehrschichtlackierung aufgetragen.

In einer Ausführungsform umfasst die Mehrschichtlackierung mindestens eine weitere Basislackierung eines Basislacks mit einem Festkörpergehalt von mindestens 35 Gew.-%, bezogen auf das Gesamtgewicht des Lacks, welcher eine oder mehrere, gleiche oder verschiedene Verbindungen nach Formel (I) und/oder Formel (II) enhält.

Die erfindungsgemäße Mehrschichtlackierung kann auch mindestens eine weitere Basislackierung eines Basislacks BI umfassen, wobei dieser weder Verbindungen nach Formel (I) noch Verbindungen nach Formel (II) enthält. Der Basislack BI hat einen Festkörpergehalt, bezogen auf das Gesamtgewicht des Basislacks, von mindestens 35 Gew.-%.

In einer bevorzugten Ausführungsform ist die Mehrschichtlackierung so aufgebaut, dass die oberste Lackierung eine Klarlackierung eines Klarlacks der erfindungsgemäßen Mehrschichtlackierung ist. Darunter befindet sich eine Basislackierung eines Basislacks der erfindungsgemäßen Mehrschichtlackierung. Demzufolge ist es bevorzugt, dass in den beiden obersten Schichten der erfindungsgemäßen Mehrschichtlackierung mindestens je eine Verbindung der Formel (I) oder (II) enthalten ist. Besonders bevorzugt umfasst die erfindungsgemäße Mehrschichtlackierung ein- oder zwei Basislackierungen und eine Klarlackierung.

Beschichtungen aus zwei Basislacken und einem Klarlack können im 3-Wet-Verfahren gehärtet werden.

Basislack und Klarlack der erfindungsgemäßen Mehrschichtlackierung werden mittels üblicher Verfahren zur Applikation von flüssigen Beschichtungsmitteln, wie beispielsweise Tauchen, Rakeln, Spritzen, Walzen o.ä., insbesondere aber mittels Spritzen, appliziert. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Besonders vorteilhaft ist es, einen Basislack in einem ersten Auftrag durch ESTA und einem zweiten Auftrag pneumatisch zu applizieren.

Vorzugsweise wird der applizierte Basislack kurz abgelüftet oder kurz getrocknet, im Allgemeinen bei einer Temperatur zwischen 30 und kleiner 100 °C für eine Zeit von 1 bis 15 min. Danach wird der Klarlack appliziert.

Der applizierte Basislack und der applizierte Klarlack werden gemeinsam thermisch gehärtet. Sofern der Klarlack auch noch mit aktinischer Strahlung härtbar ist, erfolgt noch eine Nachhärtung durch Bestrahlung mit aktinischer Strahlung.

Die Aushärtung kann nach einer gewissen Ruhezeit erfolgen. Sie kann eine Dauer von 30 sec bis 2 h, vorzugsweise 1 min bis 1 h und insbesondere 1 bis 45 min haben. Die Ruhezeit dient beispielsweise zum Verlauf und zur Entgasung der Lackschichten oder zum Verdunsten von flüchtigen Bestandteilen. Die Ruhezeit kann durch die Anwendung erhöhter Temperaturen bis 90 °C und/oder durch eine reduzierte Luftfeuchte < 10 g Wasser/kg Luft unterstützt und/oder verkürzt werden, sofern hierbei keine Schädigungen oder Veränderungen der Lackschichten eintreten, etwa eine vorzeitige vollständige Vernetzung.

Die Aushärtung erfolgt üblicherweise bei einer Temperatur zwischen 90 und 160 °C während einer Zeit von 15 bis 90 min.

Für die Trocknung bzw. Konditionierung der nassen Basislackierung sowie der nassen Klarlackierung werden bevorzugt thermische und/oder Konvektionsverfahren verwendet, wobei übliche und bekannten Vorrichtungen wie Durchlauföfen, NIR- und IR-Heizstrahler, Gebläse und Blastunnel eingesetzt werden. Diese Vorrichtungen können auch miteinander kombiniert werden.

Bei den erfindungsgemäßen Mehrschichtlackierungen weist die Basislackierung im Allgemeinen eine Trockenfilmschichtdicke von 3 bis 40 µm, bevorzugt von 5 bis 30 µm, und insbesondere 7 bis 25 µm, und die Klarlackierung im Allgemeinen eine Trockenfilmschichtdicke von 10 bis 120 µm, bevorzugt von 30 bis 80 µm, insbesondere 40 bis 70 µm, auf.

Die gegebenenfalls vorhandene weitere Basislackierung eines Basislacks BI weist im Allgemeinen eine Trockenfilmschichtdicke von 3 bis 40 µm, bevorzugt von 5 bis 30 µm, und insbesondere bevorzugt von 7 bis 25 µm, auf.

Darüber hinaus betrifft die Erfindung ein Verfahren zur Herstellung von Mehrschichtlackierungen, bei dem in der Reihenfolge

a. zunächst mindestens ein Basislack mit einem Festkörperanteil von mindestens 35 Gew.-%, bezogen auf das Gesamtgewicht des Basislacks, und

b. anschließend mindestens ein Klarlack mit einem Festkörperanteil von mindestens 50 Gew.-%, bezogen auf das Gesamtgewicht des Klarlacks,

auf ein Substrat appliziert werden, wobei in dem Basislack und dem Klarlack je 0,5 bis 3,0 Gew.-%, bezogen auf das Gesamtgewicht des jeweiligen Lacks, mindestens einer Verbindung der Formel (I) oder mindestens eine Verbindung

der Formel (II) enthalten ist. Vorzugsweise bilden die Basislackierung des Basislacks und die abschließende Klarlackierung des Klarlacks zwei aufeinanderfolgende Schichten. Für bevorzugte Ausführungsformen wird auf die Basis- und Klarlacke der erfindungsgemäßen Mehrschichtlackierung verwiesen.

In einer weiteren Ausführungsform betrifft die Erfindung ein Verfahren zur Herstellung von Mehrschichtlackierungen, bei dem in der Reihenfolge

a. zunächst mindestens ein Basislack BI, der weder Verbindungen nach Formel (I) noch Verbindungen nach Formel (II) enthält,
b. anschließend mindestens ein Basislack mit einem Festkörperanteil von mindestens 35 Gew.-%, bezogen auf das Gesamtgewicht des Basislacks, und
c. danach mindestens ein Klarlack mit einem Festkörperanteil von mindestens 50 Gew.-%, bezogen auf das Gesamtgewicht des Klarlacks,

auf ein Substrat appliziert werden, wobei in dem Basislack des Verfahrensschritts b. und dem Klarlack je 0,5 bis 3,0 Gew.-%, bezogen auf das Gesamtgewicht des jeweiligen Lacks, mindestens eine Verbindung der Formel (I) oder mindestens eine Verbindung der Formel (II) enthalten sind. Vorzugsweise bilden die Basislackierung des Basislacks des Verfahrensschritts b. und die abschließende Klarlackierung des Klarlacks zwei aufeinanderfolgende Schichten. Für bevorzugte Ausführungsformen wird auf die Basis- und Klarlacke der erfindungsgemäßen Mehrschichtlackierung verwiesen.

Der Basislack BI hat einen Festkörpergehalt, bezogen auf das Gesamtgewicht des Basislacks BI, von mindestens 35 Gew.-%.

Darüber hinaus betrifft die Erfindung die Verwendung von Sulfonsäureverbindungen der Formel (I) und/oder der Formel (II) als Katalysatoren in Basislacken mit einem Festkörpergehalt von mindestens 35 Gew.-% und Klarlacken mit einem Festkörpergehalt von mindestens 50 Gew.-%, jeweils bezogen auf das Gesamtgewicht des jeweiligen Lacks, für die Herstellung von Mehrschichtlackierungen. Die Katalysatoren der Formeln (I) und (II) katalysieren als Protonen-Donor die Melamin-Bindemittel-Reaktion. Für bevorzugte Ausführungsformen wird auf die Basis- und Klarlacke der erfindungsgemäßen Mehrschichtlackierung verwiesen.

Die Erfindung umfasst zudem Substrate aus Metall und/oder Kunststoff, die mit der erfindungsgemäßen Mehrschichtlackierung lackiert worden sind.

Ein weiterer Aspekt der Erfindung ist die Verwendung der erfindungsgemäßen Mehrschichtlackierungen zur Automobilserienlackierung, der Nutzfahrzeug- und Autoreparatur-Lackierung, für die Beschichtung von Bauteilen für den Schiff- und Flugzeugbau oder von Bauteilen für Haushalts- und Elektrogeräte oder deren Teile.

**Bindemittel**

Der Basislack und der Klarlack der erfindungsgemäßen Mehrschichtlackierungen können physikalisch härtend sein.

Im Rahmen der vorliegenden Erfindung bedeutet der Begriff "physikalische Härtung" die Härtung einer Schicht aus einem Beschichtungsmittel durch Verfilmung durch Lösemittelabgabe aus dem Beschichtungsmittel, wobei die Verknüpfung innerhalb der Beschichtung über Schlaufenbildung der Polymermoleküle der Bindemittel (zu dem Begriff vgl. Römpp Lexikon Lacke und Druckfarben, Seiten 73 und 74, Stichwort "Bindemittel") erfolgt. Oder aber die Verfilmung erfolgt über die Koaleszenz von Bindemittelteilchen (vgl. Römpp Lexikon Lacke und Druckfarben, Seiten 274 und 275, Stichwort "Härtung"). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Basis- und/oder Klarlack können thermisch härtbar sein. Hierbei kann es selbstvernetzend oder fremdvernetzend sein.

Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind, oder aber das Bindemittel enthält reaktive funktionelle Gruppen, die "mit sich selbst" reagieren können. Als fremdvernetzend werden dagegen solche Beschichtungsmittel bezeichnet, worin die eine Art der komplementären reaktiven funktionellen Gruppen in dem Bindemittel, und die andere Art in einem Vernetzungsmittel vorliegen. Ergänzend wird hierzu auf Römpp Lexikon Lacke und Druckfarben, Georg Thieme Verlag, Stuttgart, New York, 1998, "Härtung", Seiten 274 bis 276, insbesondere Seite 275, unten, verwiesen.

Als Bindemittel geeignet sind dabei die in Basis- und Klarlacken im Bereich der Automobilindustrie üblicherweise eingesetzten Bindemittel, wobei in dem Fachmann bekannter Weise über die Auswahl der Art und Menge der zur Herstellung dieser Bindemittel eingesetzten Aufbaukomponenten die Eigenschaften und damit die Eignung der Bindemittel für Basis- und Klarlack gesteuert wird.

Es werden vorzugsweise Bindemittel mit Thio-, Hydroxyl-, N-Methylolamino-N-Alkoxymethylamino-, Imino-, Carbamat-, Allophanat und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether, Siloxan-, Carbonat-, Amino-, Hydroxy- und/oder beta-Hydroxyalkylamidgruppen, bevorzugt Epoxy-, beta-Hydroxyalkylamid-, blockierte und unblockierte Isocyanat-, Urethan- oder Alkoxymethylaminogruppen, andererseits eingesetzt.

Im Falle selbstvernetzender Beschichtungsstoffe enthalten die Bindemittel insbesondere Methylol-, Methylolether- und/oder N-Alkoxymethylaminogruppen.

Komplementäre reaktive funktionelle Gruppen, die für die Verwendung in den Beschichtungsstoffen der erfindungsgemäßen Mehrschichtlackierung besonders gut geeignet sind, sind Hydroxylgruppen einerseits und blockierte und unblockierte Isocyanat-, Urethan- oder Alkoxymethylaminogruppen andererseits.

Die Funktionalität der Bindemittel bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle hydroxylgruppenhaltiger Bindemittel die OH-Zahl vorzugsweise bei 15 bis 300, bevorzugt 20 bis 250, besonders bevorzugt 25 bis 200, ganz besonders bevorzugt 30 bis 150 und insbesondere 35 bis 120 mg KOH/g nach DIN 53240.

Die vorstehend beschriebenen komplementären funktionellen Gruppen können nach den üblichen und bekannten Methoden der Polymerchemie in die Bindemittel eingebaut werden. Dies kann beispielsweise durch den Einbau von Monomeren, die entsprechende reaktive funktionelle Gruppen tragen, und/oder mit Hilfe polymeranaloger Reaktionen geschehen.

Geeignete Bindemittel weisen im Allgemeinen ein zahlenmittleres Molekulargewicht von 400 bis 5000 g/mol auf. Die Bestimmung des Molekulargewichts erfolgt mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

Vorzugsweise werden die Bindemittel in einer Menge von 15 bis 50 Gew.-%, bevorzugt von 20 bis 40 Gew.-%, jeweils bezogen auf das Gesamtgewicht des Basis- bzw. Klarlacks, eingesetzt.

Als Bindemittel geeignet sind beispielsweise statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Seite 457, Stichworte "Polyaddition" und "Polyadditionsharze (Polyaddukte)", sowie Seiten 463 und 464, Stichworte "Polykondensate", "Polykondensation" und "Polykondensationsharze", sowie Seiten 73 und 74, Stichwort "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate. Unter den Begriff (Meth)Arylat- werden sowohl Acylat- als auch Methacrylat verstanden.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester.

Von diesen Bindemitteln weisen die (Meth)Acrylat(co)polymerisate und die Polyester, insbesondere die (Meth)Acrylat(co)polymerisate, besondere Vorteile auf und werden deshalb besonders bevorzugt verwendet.

Geeignete Polyesterharze können gesättigt oder ungesättigt, insbesondere gesättigt sein und sind beispielsweise in der EP-B-787 159, Seite 4, Zeilen 26 bis 53, beschrieben.

Geeignete Acrylatharze können nach den dem Fachmann bekannten Methoden unter Verwendung olefinisch ungesättigter Monomere mit reaktiven funktionellen Gruppen, ggf. im Kombination mit Monomeren ohne reaktive funktionelle Gruppen, hergestellt werden.

Beispiele geeigneter olefinisch ungesättigter Monomere mit reaktiven funktionellen Gruppen sind:

a) Monomere, welche mindestens eine Hydroxyl-, Amino-, Alkoxymethylamino-, Carbamat-, Allophanat- oder Iminogruppe pro Molekül tragen, wie

- Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich, sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat,- methacrylat, -ethacrylat, -crotonat, -maleinat, - fumarat oder -itaconat; oder Hydroxycyclo-alkylester wie 1,4-Bis(hydroxymethyl)cyclohexan-, Octahydro-4,7-methano-1 H-indendimethanol- oder Methylpropandiolmonoacrylat, -monomethacrylat, - monoethacrylat, -monocrotonat, -monomaleinat, -monofumarat oder - monoitaconat; Umsetzungsprodukte aus cyclischen Estern, wie z.B. epsilon-Caprolacton und diesen Hydroxyalkyl- oder -cycloalkylestern;

- olefinisch ungesättigte Alkohole wie Allylalkohol;

- Polyole wie Trimethylolpropan mono- oder diallylether oder Pentaerythritmono-, -di- oder -triallylether;

- Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;

- Aminoethylacrylat, Aminoethylmethacrylat, Allylamin oder N-Methyliminoethylacrylat;

- N,N-Di(methoxymethyl)aminoethylacrylat oder -methacrylat oder N,N-Di(butoxymethyl)aminopropylacrylat oder -methacrylat;

- (Meth)Acrylsäureamide, wie (Meth)Acrylsäureamid, N-Methyl-, NMethylol-, N,N-Dimethylol-, N-Methoxymethyl-, N,N-Di(methoxymethyl)-, N-Ethoxymethyl- und/oder N,N-Di(ethoxyethyl)(meth)-acrylsäureamid;

- Acryloyloxy- oder Methacryloyloxyethyl-, propyl- oder butylcarbamat oder - allophanat; weitere Beispiele geeigneter Monomere, welche Carbamatgruppen enthalten, werden in den Patentveröffentlichungen U.S. Pat. No. 3.479.328, U.S. Pat. No. 3.674.838, U.S. Pat. No. 4.126.747, U.S. Pat. No. 4.279.833 oder U.S. Pat. No. 4.340.497 beschrieben.

b) Monomere, welche mindestens eine Säuregruppe pro Molekül tragen, wie

- Acrylsäure, beta-Carboxyethylacrylat, Methacrylsäure, Ethacrylsäure, Crotonsäure, Maleinsäure, Fumarsäure oder Itaconsäure;

- olefinisch ungesättigte Sulfon- oder Phosphonsäuren oder deren Teilester;

- Maleinsäuremono(meth)acryloyloxyethylester, Bernsteinsäuremono(meth)acryloyloxyethylester oder Phthalsäuremono(meth)acryloyloxyethylester; oder

- Vinylbenzoesäure (alle Isomere), alpha-Methylvinylbenzoesäure (alle Isomere) oder Vinylbenzsolsulfonsäure (alle Isomere).

c) Epoxidgruppen enthaltende Monomere, wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im Allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate , führen.

Beispiele geeigneter olefinisch ungesättigter Monomere ohne reaktive funktionelle Gruppen sind u.a. Alkylester der Acrylsäure, Methacrylsäure oder einer anderen alpha,beta-olefinisch ungesättigten Carbonsäure, vinylaromatische Verbindungen sowie Mischungen dieser Monomeren.

Geeignet als Bindemittel sind außerdem Polyurethanharze. Die Polyrethanharze werden in den Fachmann bekannter Weise erhalten durch Umsetzung

- mindestens eines Polyols, ausgewählt aus der Gruppe, bestehend aus Polyester- und Polyetherpolyolen, bevorzugt mit einem zahlenmittleren Molekulargewicht von 400 bis 5000, und

- mindestens eines Polyisocyanats sowie

- gegebenenfalls mindestens einer Verbindung, enthaltend mindestens eine isocyanatreaktive funktionelle Gruppe und mindestens eine (potentiell) anionische Gruppe im Molekül

- gegebenenfalls mindestens einer weiteren Verbindung, enthaltend mindestens eine isocyanatreaktive funktionelle Gruppe und

- gegebenenfalls mindestens einer Verbindung eines zahlenmittleren Molekulargewichts von 60 bis 600 Dalton, enthaltend Hydroxyl- und/oder Aminogruppen im Molekül

Derartige Polyurethanharze sind beispielsweise in den europäischen Patentanmeldungen EP 228003 und EP 574417 beschrieben.

Derartige Polyurethanharze werden beispielsweise erhalten, indem als IsocyanatKomponente im Bereich der Lackindustrie üblicherweise eingesetzte Isocyanate, wie z.B. Hexamethylendiisocyanat, Octamethylediisocyanat, Decamethylendiisocyanat, Dodecamethylendiisocyanat, Tetradecamethylendiisocyanat, Trimethylhexandiisocyanat, Tetramethyl-hexandiisocyanat, Isophorondiisocyanat, 2-Isocyanatopropylcyclohexyl-isocyanat, Dicyclohexylmethan-2,4'-diisocyanat, Dicyclohexylmethan4,4'-diisocyanat, 1,4- oder 1,3-Bis(isocyanato-methyl)cyclohexan, 1,4- oder 1,3- oder 1,2-Diisocyanatocyclohexan, 2,4- oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatornethyl-oktan, 1,7-Diisocyanato-4-isocyanatomethyl-heptan oder 1-Isocyanato-2-(3-isocyanatopropyl)-cyclohexan oder Tetramethylxylylendiisocyanaten (TMXDI) oder Mischungen aus diesen Polyisocyanaten, bevorzugt Tetramethylxylylen-diisocyanat (TMXDI) und/oder Isophorondiisocyanat, bevorzugt Isophorondiisocyanat, verwendet werden.

Als Kettenverlängerungsmittel mit Hydroxyl- bzw. Aminogruppen werden bevorzugt Trimethylolpropan und Diethanolamin eingesetzt.

Zusammen oder anstelle der genannten Polyurethanharze sind als Bindemittel in den Basislacken auch sogenannte acrylierte Polyurethanharze geeignet, die in dem Fachmann bekannter Weise erhältlich sind, indem ethylenisch ungesättigte Monomere in Gegenwart eines Polyurethanharzes polymerisiert werden. Dabei ist es möglich, Polyurethanharze ohne Doppelbindungen und/oder Polyurethanharze mit Doppelbindungen einzusetzen.

Als Bindemittel können auch acrylierte Polyurethanharze mit seitenständigen und/oder endständigen Doppelbindungen, insbesondere mit seiten- und/oder endständigen Ethenylarylengruppen, eingesetzt werden.

Die acrylierten Polyurethanharze mit seitenständigen und/oder endständigen Doppelbindungen können erhalten werden durch Umsetzung eines Polyurethanpräpolymers (1-1), das mindestens eine freie Isocyanatgruppe enthält, mit einer Verbindung (1-2), die mindestens eine ethylenisch ungesättigte Doppelbindung und eine gegenüber NCO-Gruppen reaktive Gruppe, insbesondere eine Hydroxylgruppe oder eine Aminogruppe, aufweist.

Die acrylierten Polyurethanharze mit seitenständigen und/oder endständigen Doppelbindungen können auch erhalten werden durch Umsetzung eines Polyurethanpräpolymers (11-1), das mindestens eine gegenüber NCO-Gruppen reaktive Gruppe, insbesondere mindestens eine Hydroxylgruppe oder eine Aminogruppe, enthält, mit einer Verbindung (11-2), die mindestens eine ethylenisch ungesättigte Doppelbindung und eine freie Isocyanatgruppe aufweist.

Als Bindemittel eingesetzt werden außerdem Propfmischpolymerisate, die erhältlich sind durch Polymerisation von olefinisch ungesättigten Monomeren in Gegenwart der acrylierten Polyurethanharze mit seitenständigen und/oder endständigen Doppelbindungen.

Insbesondere werden Pfropfmischpolymerisate, die einen hydrophoben Kern aus mindestens einem einpolymerisierten olefinisch ungesättigten Monomeren und eine hydrophile Schale aus mindestens einem hydrophilen acrylierten Polyurethan umfassen, eingesetzt. Geeignet sind aber auch Pfropfmischpolymerisate, die einen hydrophoben Kern aus mindestens einem hydrophoben acrylierten Polyurethan und eine hydrophile Schale aus mindestens einem einpolymerisierten olefinisch ungesättigten Monomeren umfassen.

Geeignete acrylierte Polyurethanharze sowie daraus hergestellte Propfmischpolymerisate sind beispielsweise in der WO01/25307. Seite 5, Zeile 14, bis Seite 45, Zeile 4, und der EP-B-787 159, Seite 2, Zeile 27, bis Seite 7, Zeile 13, beschrieben.

Die beschriebenen Polyurethanharze können ggf. in Kombination mit einem oder mehreren Polyacrylatharzen und/oder mit einem oder mehreren Polyesterharzen eingesetzt werden.

**Vernetzungsmittel**

Der Gehalt an Vernetzungsmittel im Basis- bzw. Klarlack der erfindungsgemäßen Mehrschichtlackierung beträgt, jeweils bezogen auf das Gesamtgewicht des jeweiligen Lacks, bevorzugt 5 bis 30 Gew.-% und besonders bevorzugt 7 bis 20 Gew.-%.

Als ggf. eingesetztes Vernetzungsmittel können die Basislacke freie Isocyanate oder blockierte Isocyanate und/oder Aminoplastharze enthalten.

Als Isocyanat kommen dabei prinzipiell die bei der Beschreibung der als Bindemittel geeigneten Polyurethanharze genannten, im Bereich der Lackindustrie üblicherweise eingesetzte Isocyanate in Betracht, bevorzugt TACT und

Dimethylpyrazol-blockiertes trimeres Hexamethylendiisocyanat sowie im Falle der 2-Komponenten-Beschichtungsmittel trimeres Hexamethylendiisocyanat.

Als Blockierungsmittel kommen alle üblicherweise eingesetzten Blockierungsmittel, wie die entsprechenden Alkohole, Amine, Ketone, Pyrazole u.a. in Frage, bevorzugt Blockierungsmittel mit einer Deblockierungstemperatur kleiner 130 °C.

Geeignet sind prinzipiell die im Bereich der Lackindustrie üblicherweise eingesetzten Aminoplastharze, wobei über die Reaktivität der Aminoplastharze die Eigenschaften der Basislacke gesteuert werden können. Bevorzugt werden mit Methanol und/oder Butanol veretherte Aminoplastharze, beispielsweise die im Handel unter den Bezeichnungen Cymel®, Resimene®, Maprenal® und Luwipal® erhältlichen Produkte, insbesondere Resimene® 747 und Resimene® 755, eingesetzt.

**Farbmittel**

Die Basislacke enthalten mindestens ein Farbmittel. "Farbmittel" ist der Oberbegriff für alle farbgebenden Substanzen. Sie lassen sich nach DIN 55944: 1990-04 nach ihrer Löslichkeit im umgebenden Medium in Farbstoffe und Pigmente einteilen. Farbstoffe sind organische, im umgebenden Medium lösliche schwarze oder bunte Substanzen (vgl. Römpp Lacke und Druckfarben, Seite 221, Stichwort "Farbmittel"). Pigmente hingegen sind pulver- oder plättchenförmige Farbmittel, die im Gegensatz zu Farbstoffen im umgebenden Medium unlöslich sind (vgl. Römpp Lacke und Druckfarben, Seite 451, Stichwort "Pigmente")

Vorzugsweise ist das Farbmittel ein Pigment. Vorzugsweise wird das Pigment aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Besonders bevorzugt enthält der Basislack mindestens ein effektgebendes Pigment, insbesondere mindestens ein Metallplättchenpigment. Zusammen mit dem oder den effektgebenden Pigmenten enthält der Basislack ggf. noch mindestens ein oder mehrere farbgebende Pigmente.

Beispiele geeigneter Effektpigmente, die auch farbgebend sein können, sind Metallplättchenpigmente, wie handelsübliche Aluminiumbronzen und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Seite 176, Stichwort "Effektpigmente" und Seiten 380 und 381, Stichworte "Metalloxid-Glimmer-Pigmente" bis "Metallpigmente" verwiesen.

Insbesondere werden handelsübliche Aluminiumbronzen eingesetzt. Eingesetzt werden dabei sowohl unbehandelte Typen, die beispielsweise unter dem Namen Stapa® Metallux der Firma Eckart im Handel erhältlich sind, als auch behandelte Typen, insbesondere silanisierte Typen, die beispielsweise in der WO 01/81483 beschrieben sind und beispielsweise unter dem Namen Hydrolan® der Firma Eckart im Handel erhältlich sind.

Vorzugsweise weist das Metallplättchenpigment eine Dicke von 200 bis 2000 nm und insbesondere 500 bis 1500 nm, auf.

Bevorzugt hat das Metallplättchenpigment eine mittlere Teilchengröße von 10 bis 50 und insbesondere von 13 bis 25 $\mu$m (ISO 13320-1 nach Cilas (Gerät 1064)).

Geeignete organische und/oder anorganische farbgebende Pigmente sind die in der Lackindustrie üblicherweise eingesetzten Pigmente. Einsetzbar sind ferner auch die in der Lackindustrie üblicherweise eingesetzten Farbstoffe.

Beispiele für geeignete anorganische farbgebende Pigmente sind Weißpigmente wie Titandioxid, Zink-Weiß, Zinksulfid oder Lithopone; Schwarzpigmente wie Russ, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, Stichworte "Eisenblau-Pigmente" bis "Eisenoxidschwarz", Seiten 451 bis 453, Stichworte "Pigmente" bis "Pigmentvolumenkonzentration", Seite 563, Stichwort "Thioindigo-Pigmente", Seite 567, Stichwort "Titandioxid-Pigmente", Seiten 400 und 467, Stichwort "Natürlich vorkommende Pigmente", Seite 459, Stichwort "Polycyclische Pigmente", Seite 52, Stichworte "Azomethinpigmente", "Azopigmente", und Seite 379, Stichwort "Metallkomplex-Pigmente", verwiesen.

Der Gehalt an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in

Basislacken. Vorzugsweise liegt der Pigmentgehalt im Falle von Unilacken, jeweils bezogen auf das Gesamtgewicht des Basislacks, bei 1 bis 49 Gew.-%. Vorzugsweise liegt der Pigmentgehalt im Falle von Metallic-Lacken, jeweils bezogen auf das Gesamtgewicht des Basislacks, bei 0,5 bis 40, bevorzugt 0,5 bis 35, besonders bevorzugt bei 1 bis 30 Gew.-%.

**Organische Lösemittel**

Der Gehalt des Basislacks der erfindungsgemäßen Mehrschichtlackierung an Lösemittel beträgt vorzugsweise, jeweils bezogen auf das Gesamtgewicht des Basislacks, 30 bis 65 Gew.-%, bevorzugt 30 bis 62 Gew.-%, besonders bevorzugt 30 bis 60 Gew.-%.

Bevorzugte Basislacke weisen bei 23°C eine Viskosität von 16 s bis 35 s und besonders bevorzugt 18 bis 25 s, Auslaufzeit im Ford 3 Cup auf. Der Festkörpergehalt beträgt mindestens 35 Gew.-%, bevorzugt mindestens 38 Gew.-% und besonders bevorzugt mindestens 40 Gew.-%.

Der Gehalt des Klarlacks der erfindungsgemäßen Mehrschichtlackierung an Lösemittel beträgt vorzugsweise, jeweils bezogen auf das Gesamtgewicht des Klarlacks, 30 bis 50 Gew.-%, bevorzugt 30 bis 48 Gew.-%.

Bevorzugte Klarlacke weisen bei 23°C eine Viskosität von 40 s bis 60 s, besonders bevorzugt 45 bis 50 s Auslaufzeit im Ford 3 Cup auf. Der Festkörpergehalt liegt bei mindestens 50 Gew.-% und bevorzugt bei mindestens 52 Gew.-%.

Als Lösemittel geeignet sind alle üblicherweise in der Lackindustrie eingesetzten Lösemittel, beispielsweise Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Butylglykolacetat, Butanol, Dipropylenglykolmethylether, Glykolsäurebutylester, Xylol, Toluol, Shellso® T, Pine Oel 90/95, Solventnaphtha®, Shellsol® A, Solvesso, Benzin 135/180 u.ä.

Die Beschichtungsmittel (Basislack und Klarlack) sind nicht-wässrig.

**Hilfs- und Zusatzstoffe**

Außer den vorstehend beschriebenen Komponenten können Basis- und/oder Klarlacke übliche und bekannte Hilfs- und Zusatzstoffe in üblichen Mengen enthalten, bevorzugt 0,05 bis 40 Gew.-% und besonders bevorzugt 0,5 bis 30 Gew.-%, bezogen auf das Gesamtgewicht des jeweiligen Lacks, enthalten.

Beispiele für geeignete Hilfs- und Zusatzstoffe sind organische und anorganische Füllstoffe, z.B. Talkum, und/oder sowie weitere übliche Hilfs- und Zusatzstoffe, wie z.B. Antioxidantien, Entlüftungsmittel, Netzmittel, Dispergiermittel, Emulgatoren, Rheologiehilfsmittel wie Verlaufsmittel, Verdickungsmittel, Antiablaufmittel und Thixotropiermittel, Wachse, Slipadditive, Reaktivverdünner, Rieselhilfen, Sikkative, Bioziden, Additive zur Verbesserung der Untergrundbenetzung, Additive zur Verbesserung der Oberflächenglätte, Mattierungsmittel, Radikalfänger, Lichtschutzmittel, vorzugsweise die oben beschriebenen UV-Absorber mit einem Absorptionsmaximum unter 370 nm und/oder HALS, Korrosionsinhibitoren, Flammschutzmittel oder Polymerisationsinhibitoren, wie sie in dem Buch "Lackadditive" von Johan Bielemann, Wiley-VCH, Weinheim, New York, 1998, im Detail beschrieben werden. Bevorzugte Hilfs- und Zusatzstoffe sind Rheologiehilfsmittel, Entlüftungsmittel, Netzmittel, Dispergiermittel, UV-Absorber und Radikalfänger. Besonders bevorzugte Hilfs- und Zusatzstoffe sind UV-Absorber und Netzmittel.

Vorzugsweise enthält der Basislack der erfindungsgemäßen Mehrschichtlackierung als Zusatzstoff mindestens einen Bestandteil, ausgewählt aus der Gruppe bestehend aus Polymermikroteilchen, stabilisierten anorganischen Teilchen, Wachsen und wachsartigen Verbindungen.

**Polymermikroteilchen (M)**

Vorteilhafterweise werden in Basislacken der erfindungsgemäßen Mehrschichtlackierung Polymermikroteilchen eingesetzt. Geeignete Polymermikroteilchen sind beispielsweise in der EP-A-480 959, Seite 3, Zeile 36, bis Seite 4, Zeile 35, der WO 96/24619, der WO 99/42529, der EP-B-1 173 491, EP-B-1 185 568, WO 03/089487, WO 03/089477, WO 01/72909 und WO 99/42531 beschrieben. Die Polymermikroteilchen können insbesondere zur Steuerung des Verlaufs, des Abdunstverhaltens und des Anlöseverhaltens durch den Klarlack eingesetzt werden.

Geeignete Polymermikroteilchen weisen üblicherweise ein zahlenmittleres Molekulargewicht von 2000 bis 100000 auf. Die Bestimmung des Molekulargewichts erfolgt mittels GPC-Analyse mit THF (+ 0,1% Essigsäure) als Eluent (1 ml/min) auf einer Styrol-Divinylbenzol-Säulenkombination. Die Kalibrierung wird mit Polystyrol-Standards durchgeführt.

Geeignete Polymermikroteilchen weisen außerdem üblicherweise eine mittlere Teilchengröße von 0,01 bis 10 $\mu$m, insbesondere von 0,01 bis 5 $\mu$m, und ganz besonders bevorzugt von 0,02 bis 2 $\mu$m, nach ISO 13320-1 auf.

Besonders bevorzugt eingesetzte Polymermikroteilchen weisen reaktive funktionelle Gruppen auf, die mit den funktionellen Gruppen des Vernetzungsmittels reagieren können. Insbesondere weisen die Polymermikroteilchen dabei

Hydroxylgruppen auf. Hierbei weisen die Polymermikroteilchen bevorzugt eine Hydroxylzahl von 5 bis 150 mg KOH/g nach DIN 53240 auf. Hydroxylgruppenhaltige Polymermikroteilchen sind beispielsweise in der WO 01 /72909 beschrieben.

Vernetzte Polymermikroteilchen sind beispielsweise dadurch erhältlich, indem ein Gemisch aus:

(a) einem ethylenisch ungesättigten Monomeren, das eine ethylenisch ungesättigte Gruppe pro Molekül enthält oder ein Gemisch aus solchen Monomeren und

(b) einem ethylenisch ungesättigten Monomeren, das mindestens zwei ethylenisch ungesättigte Gruppen pro Molekül enthält oder ein Gemisch aus solchen Monomeren

in einer wässrigen Phase ggf. in Gegenwart von Emulgatoren oder ggf. in Gegenwart eines Trägerharzes polymerisiert und die auf diese Weise erhaltene wässrige Polymermikroteilchendispersion anschließend in ein organisches Lösemittel oder ein Gemisch aus organischen Lösemitteln überführt wird.

Bevorzugt sind Polymermikroteilchen, die unter Verwendung von ionische und/oder polare Gruppen, vorzugsweise Hydroxylgruppen und/oder Carboxylgruppen enthaltenden Komponenten hergestellt worden sind. Die Komponenten (a) und sollen in der Regel zwischen 1 und 20, bevorzugt zwischen 3 und 15 Gew.-% ionische und/oder polare Gruppen enthalten.

Um ausreichend vernetzte Polymermikroteilchen zu erhalten, reicht es in der Regel aus, auf ein Mol der Komponente (a) 0,25 bis 1,2 Mol, bevorzugt 0,3 bis 1 Mol der Komponente einzusetzen.

Die in den Basislacken eingesetzten Polymermikroteilchen (M) können aber auch direkt in organischer Phase hergestellt werden.

Bevorzugt eingesetzte Polymermikroteilchen sind beispielsweise dadurch erhältlich, indem ein Gemisch aus:

(c) einem ethylenisch ungesättigten Monomeren (M1), das mindestens eine reaktive Gruppe (G1) pro Molekül enthält oder ein Gemisch aus solchen Monomeren (M1) und

(d) ggf. einem ethylenisch ungesättigten Monomeren (M2), das mindestens eine, von (G1) verschiedene, reaktive Gruppe (G2) pro Molekül enthält oder ein Gemisch aus solchen Monomeren (M2) und

(e) ggf. einem weiteren ethylenisch ungesättigten Monomeren (M3) oder ein Gemisch aus solchen Monomeren (M3)

einer Polymerisation in einem organischen Lösemittel ggf. in Gegenwart eines Trägerharzes unterworfen wird.

Geeignete Monomere (M1) sind beispielsweise Monomere, die Hydroxylgruppen, Carbamatgruppen, Aminogruppen, Alkoxymethyl-aminogruppen, Allophanatgruppen oder Iminogruppen, insbesondere Hydroxylgruppen, enthalten.

Die Monomeren (M1) mit den reaktiven Gruppen (G1) können dabei auch durch Reaktion zweier Verbindungen, von denen eine Verbindung (a) eine reaktive Gruppe (a) und mindestens eine ethylenisch ungesättigte Doppelbindung und die andere Verbindung eine mit ethylenisch ungesättigte Doppelbindung aufweist, hergestellt werden.

Geeignete Monomere (M2) sind beispielsweise Monomere, die Carboxylgruppen enthalten.

Geeignete Monomere (M3) sind die üblicherweise eingesetzten, sogenannten Neutralmonomere, also ethylenisch ungesättigte Monomere, die keine reaktiven Gruppen aufweisen.

Die Polymermikroteilchen (M) werden in den Basislacken der erfindungsgemäßen Mehrschichtlackierung üblicherweise in einer Menge von 3 bis 30 Gew.-%, insbesondere von 10 bis 25 Gew.-%, jeweils bezogen auf das Gesamtgewicht des Basislacks, eingesetzt.

### Anorganische Teilchen (N)

Der Basislack der erfindungsgemäßen Mehrschichtlackierung kann ein oder mehrere anorganische Teilchen (N), welches bzw. welche eine Teilchengröße von 1 bis 800 nm, bevorzugt von 3 bis 250 nm, besonders bevorzugt von 4 bis 100 nm, aufweisen, enthalten. Diese Teilchengröße bezieht sich auf die Größe der dispergierten Teilchen (N) vor Einarbeitung in den Basislack. Die Teilchengröße kann beispielsweise durch Elektronenmikroskopie ermittelt werden.

Geeignete anorganische Teilchen (N) werden beispielsweise in der WO 2008/058590 beschrieben.

Bevorzugt weisen das bzw. die anorganischen Teilchen (N) eine Primärteilchengröße von 3 bis 200 nm, insbesondere von 3 bis 30 nm, auf. Im Gegensatz zu den oben beschriebenen Farbmitteln (farbgebende Substanzen) sind die in den Basislacken eingesetzten anorganischen Teilchen (N) üblicherweise im Wesentlichen farblos, insbesondere um nicht den Farbton des Basislacks zu beeinflussen.

Die anorganischen Teilchen (N) können als separate Teilchen oder in Form von Agglomeraten vorliegen, wobei

aber bevorzugt separate Teilchen eingesetzt werden. Insbesondere sollten die anorganischen Teilchen (N) vor allem leicht und stabil in den Basislack einzuarbeiten sein, um den gewünschten Einsatz des Basislacks zu gewährleisten. Die anorganischen Teilchen (N) sollten daher entweder über längere Zeit (im Bereich der Automobillackierung beispielsweise über einen Zeitraum von bis zu 12 Monaten bei Lagerung von Temperaturen von bis zu 30 °C) stabil dispergiert bleiben oder aber leicht mit üblichen Mitteln der Farbmischung, wie z.B. mit Hilfe von Rührern, redispergierbar sein.

Bevorzugt werden anorganische Teilchen (N) eingesetzt, die eine Dichte von 0,8 bis 4,5 g/$cm^3$ nach DIN 53217 aufweisen.

Die anorganischen Teilchen (N) werden üblicherweise ausgewählt aus der Gruppe der Verbindungen der Haupt- und Nebengruppen-Metalle, bevorzugt der Metalle der dritten bis fünften Hauptgruppe, der dritten bis sechsten sowie der ersten und zweiten Nebengruppe des Periodensystems der Elemente sowie den Lanthaniden, insbesondere Verbindungen von Bor, Aluminium, Gallium, Silicium, Barium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Barium, Silber, Cer, Titan und Zirkonium.

Vorzugsweise handelt es sich bei den Verbindungen der Metalle um die Oxide, Oxidhydrate, Sulfate oder Phosphate. Geeignete anorganische Teilchen (N) werden bevorzugt ausgewählt aus der Gruppe bestehend aus hydrophilen und hydrophoben, insbesondere hydrophilen, Teilchen auf der Basis von Siliciumdioxid, Aluminiumoxid, Zinkoxid, Zirkoniumoxid, Bariumsulfat und der Polysäuren und Heteropolysäuren von Übergangsmetallen, vorzugsweise von Molybdän und Wolfram. Besonders bevorzugt werden Teilchen auf der Basis von Siliciumdioxid und/oder Aluminiumoxid verwendet, insbesondere pyrogenes oder kolloidales Siliciumdioxid.

Ganz besonders bevorzugt werden hydrophile pyrogene Siliciumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil® vertrieben.

Als anorganische Teilchen (N) können aber auch sogenannte Sole, insbesondere Organosole, eingesetzt werden. Derartige Sole sind beispielsweise in der US-A-4,522,958, Spalte 7, Zeile 26, bis Spalte 11, Zeile 14, beschrieben. Insbesondere sind hier Sole auf Basis von Kieselsäure zu nennen, bei denen die anorganischen Teilchen in-situ gebildet und während und/oder nach ihrer Bildung mit einem Stabilisator (S) modifiziert werden (sogenannte stabilisierte anorganische Teilchen).

Die Teilchen können dabei mittels einer Vielzahl verschiedener, dem Fachmann bekannter Techniken hergestellt werden.

Es ist von Vorteil, wenn die anorganischen Teilchen (N) als Pasten eingearbeitet werden. Weitere Vorteile resultieren, wenn als Pastenharze oder Reibharze die im Basislack enthaltenen, bereits beschriebenen Bindemittel verwendet werden. Insbesondere werden als Pastenharze oder Reibharze für die Teilchen (N) Bindemittel verwendet, die auch zum Anreiben der Pigmente verwendet werden.

Bevorzugt werden die Teilchen (N) in einer Menge von 0,2 bis 2 Gew.-%, besonders bevorzugt von 0,5 bis 1,5 Gew.-%, jeweils bezogen auf das Gesamtgewicht des Basislacks, eingesetzt.

**Stabilisator (S)**

Die anorganischen Teilchen (N) sind zumindest teilweise mit einem Stabilisator (S), der mindestens eine Gruppe (S1), die mit der Oberfläche der anorganischen Teilchen (N) in Wechselwirkung treten kann, und eine oder mehrere hydrophobe Teilstrukturen aufweist, enthält, modifiziert.

Geeignete Stabilisatoren (S) werden beispielsweise in der WO 2008/058590 beschrieben.

Der Stabilisator (S) kann über die Gruppen (S1) mit den anorganischen Teilchen (N) in Wechselwirkung treten. Dabei ist es möglich, dass der Stabilisator mit den anorganischen Teilchen nur über physikalische Kräfte in Wechselwirkung tritt, es kann aber auch zumindest teilweise eine chemische Reaktion zwischen den Gruppen (S1) und den an der Oberfläche der anorganischen Teilchen üblicherweise befindlichen funktionellen Gruppen stattfinden. So haben insbesondere die hydrophilen anorganischen Teilchen an ihrer Oberfläche Hydroxylgruppen (z.B. bei den $SiO_2$-Typen in Form von SiOH-Gruppen), die sowohl chemisch als auch über physikalische Wechselwirkungen, wie z.B. Wasserstoffbrücken, mit den Gruppen (S1) in Wechselwirkung treten können.

Bevorzugt sind die Gruppen (S1) des Stabilisators ausgewählt aus der Gruppe Hydroxyl-, Carboxyl-, Ether-, Phosphat-, Phosphonat-, Bisphosphonat, Sulfat oder Sulfonatgruppen oder stickstoffhaltiger, hydrophiler Gruppen oder Mischungen davon. Besonders bevorzugt sind Stabilisatoren (S), die sowohl Hydroxyl- als auch Carboxlgruppen enthalten. Weiterhin besonders bevorzugt sind Stabilisatoren (S), die sowohl Hydroxylgruppen als auch Carboxylgruppen und Ethergruppen enthalten. Insbesondere werden Stabilisatoren (S) eingesetzt, die eine Hydroxylzahl von 10 bis 150 mgKOH/g nach DIN 53240 und eine Säurezahl von 2 bis 50 mg KOH/g nach DIN EN ISO 3682 aufweisen, jeweils bezogen auf den Festkörper des Stabilisators (S).

Der Stabilisator (S) kann noch eine oder mehrere hydrophobe Teilstrukturen aufweist. Diese hydrophoben

Reste können in Wechselwirkung mit den organischen Bestandteilen des Basislacks, insbesondere mit dem Lösemittel, den Bindemitteln und dem Wachs bzw. der wachsartigen Verbindung (W), treten.

Der Stabilisator (S) kann also insbesondere ein oder mehrere organische Reste (R1), der bzw. die hydrophobe Teilstrukturen aufweisen, enthalten. Darüber hinaus kann bzw. können der bzw. die organische Reste (R1) ggf. noch hydrophile Teilstrukturen aufweisen und/oder die Gruppen (S1) können zumindest teilweise oder vollständig an diese organischen Reste (R1) gebunden sein.

Es ist bevorzugt, dass die hydrophoben Teilstrukturen des Stabilisators (S) zumindest teilweise ausgewählt sind aus der Gruppe der Alkyl- oder Alkenylgruppen, insbesondere Alkyl- oder Alkenylgruppen mit 5 bis 50 C-Atomen.

Besonders bevorzugt werden als hydrophobe Teilstrukturen die Reste von gesättigten und/oder ungesättigten Fettsäuren eingesetzt, insbesondere von gesättigten und/oder ungesättigten Fettsäuren mit 5 bis 30 Kohlenstoffatomen im Molekül, wie z.B. Reste der Valeriansäure, Capronsäure, der Önanthsäure, Caprylsäure, Perlagonsäure, Caprinsäure, Undecylsäure, Laurinsäure, Myristinsäure, Palmitinsäure, Stearinsäure, Ölsäure, Elaidinsäure, Arachinsäure, Behensäure, Lignocerinsäure, Cerotinsäure, Melissinsäure, Linolsäure, Ricinensäure, Ricinolsäure, Linolensäure, Arachidonsäure, Clupanodonsäure, alpha-Elaeostearinsäure, alpha-Licansäure, alpha-Parinarsäure, Ricinolsäure und Isanolsäure und Mischungen dieser Fettsäuren und/oder die entsprechenden Hydroxysäuren der genannten Fettsäuren bzw. deren Mischungen. Ganz besonders bevorzugt werden Stabilisatoren eingesetzt, die Reste der Hydroxyvaleriansäure, Hydroxycapronsäure, Hydroxystearinsäure, Hydroxylaurinsäure, Ricinolsäure oder deren Mischungen enthalten.

Geeignet sind ferner auch die entsprechenden Reste von Dimer- und Trimerfettsäuren sowie deren Mischungen und die Reste der entsprechenden Mischungen der Dimer und/oder Trimerfettsäuren mit den genannten Fettsäuren.

Ganz besonders bevorzugt werden als Stabilisator (S) Ester der genannten (Hydroxy)Fettsäuren, (Hydroxy)Dimerfettsäuren und/oder (Hydroxy)Trimerfettsäuren, eingesetzt, insbesondere Ester mit Polyalkylenglykolen, besonders bevorzugt Ester mit Polyalkylenglykolen mit 6 bis 20 C-Atomen, wie Diethylenglykol, Triethylenglykol, Tetraethylenglykol, Dipropylenglykol, Tripropylenglykol und Mischungen davon. Hier sind insbesondere Ester von Hydroxyvaleriansäure, Hydroxycapronsäure und Hydroxystearinsäure mit Triethylenglykol, Tetraethylenglykol und Mischungen dieser Hydroxylverbindungen, dieser Ester und Mischungen der Ester mit den Säuren zu nennen.

Als Stabilisator (S) geeignet sind beispielsweise auch die entsprechenden handelsüblichen Verbindungen, sofern sie die erforderliche Struktur aufweisen. Geeignet sind daher beispielsweise die im Handel unter den Bezeichnungen Solsperse® der Firma Avecia GmbH, insbesondere Solsperse® 39000, Dispers® der Firma Th. Goldschmidt, insbesondere Dispers® 652, und entsprechende Additive der Firma Degussa.

Der Stabilisator (S) wird üblicherweise in einer Menge von 3 bis 40 Gew.-%, insbesondere von 5 bis 20 Gew.-%, ganz besonders bevorzugt von 8 bis 12 Gew.-%, jeweils bezogen auf das Gewicht der eingesetzten anorganischen Teilchen (N), eingesetzt.

Die Modifizierung der anorganischen Teilchen (N) mit dem Stabilisator (S) gewährleistet u.a., dass auch bei Lagerung bei 40 °C über 28 Tage keine signifikante Verschlechterung der Eigenschaften sowohl der Basislacke als auch der aus diesen gelagerten Basislacken hergestellten Beschichtungen, insbesondere keine Verschlechterung der rheologischen Eigenschaften der Basislacke und keine Verschlechterung des Flops der resultierenden Beschichtungen, auftritt.

**Wachs und wachsartige Verbindung (W)**

Der Basislack der erfindungsgemäßen Mehrschichtlackierung kann zusätzlich ein oder mehrere Wachse und/oder eine oder mehrere wachsartige Verbindungen enthalten. Unter "(W)" werden sowohl Wachse als auch wachsartige Verbindungen verstanden.

Geeignete Wachse und wachsartige Verbindungen werden beispielsweise in der WO 2008/058590 beschrieben.

Im Zusammenhang mit der vorliegenden Erfindung werden unter "Wachs" und "wachsartiger Verbindung" alle natürlichen und künstlich gewonnenen Stoffe verstanden, die folgende Eigenschaften aufweisen:

1. Bei 20 °C knetbar oder fest.
2. Grob- bis feinkristallin, durchscheinend bis opak.
3. Über 40 °C ohne Zersetzung schmelzend.
4. Schon wenig oberhalb des Schmelzpunktes niedrigviskos.
5. Stark temperaturabhängig in Konsistenz und Löslichkeit.
6. Unter leichtem Druck polierbar.

Erfüllt ein Stoff mehr als eine dieser Eigenschaften nicht, ist er kein "Wachs" mehr im Sinne dieser Erfindung (vgl. Ulimanns Enzyklopädie der technischen Chemie; 4. neubearbeitete und erweiterte Auflage; Verlag Chemie; Weinheim; Deerfield Beach, Florida; Basel, 1983, Seite 3).

Die Wachse oder wachsartigen Verbindungen (W) können modifiziert und/oder unmodifiziert sein. Geeignet sind alle an sich bekannten und üblichen Wachse, wobei aber bevorzugt synthetische Wachse eingesetzt werden.
Beispiele für natürliche Wachse sind pflanzliche Wachse, wie Carnaubawachs, Candelillawachs, Espartowachs, Guarumawachs, Japanwachs, Korkwachs, Montanwachs, Ouricurywachs, Reiskeimölwachs, Zuckerrohrwachs, tierische Wachse, wie Bienenwachs, Bürzeldrüsenfett, Wollwachs, Schellackwachs, Walrat, und Mineralwachse, wie Ceresin und Ozokerit.
Beispiele für chemisch modifizierte Wachse sind hydrierte Jojobawachse, Montanesterwachse und Sasolwachse.
Geeignet sind beispielsweise auch modifizierte und unmodifizierte Polyolefinwachse, wie Polyethylen- und Polypropylenwachse, Polyethylenglykolwachse und Polyamidwachse. Geeignet sind außerdem auch Polyacrylatpolymerisate und Polyacrylatcopolymerisate, die wie Wachs eine ausgeprägte Temperaturabhängigkeit der Löslichkeit in organischen Lösemitteln zeigen.
Die Wachse bzw. die Polyacrylatpolymerisate und Polyacrylatcopolymerisate haben gewöhnlich ein zahlenmittleres Molekulargewicht zwischen 300 und 20000 g/mol, bevorzugt zwischen 1000 und 10000 g/mol und vorzugsweise Tropfpunkte nach Ubbelohde zwischen 70 und 180 °C. Der Tropfpunkt ist eine Kennzahl von Schmierstoffen. Er bezeichnet die Temperatur, bei der ein Schmierfett unter genormten Prüfbedingungen einen langziehenden Tropfen bildet. Er ist nach DIN ISO 2176 geregelt.
Die Polyethylen- und Polypropylenwachse sind entweder Homo- oder Copolymere mit üblicherweise 0,5 bis 40 Gew.-% Comonomereinheiten, die sich von gesättigten oder ungesättigten Monocarbonsäuren oder deren Amiden oder Estern herleiten. Beispiele solcher Comonomereinheiten sind u.a. die Reste von Acrylsäure, Methacrylsäure, Maleinsäure, Fumarsäure, Acrylamid, Stearinsäure oder Stearinsäureamid oder Vinylacetat. Die Polyolefinwachse sind im Handel unter vielfältigen Bezeichnungen erhältlich.
Als Polyamidwachse kommen alle üblicherweise in Beschichtungsmitteln eingesetzten Polyamidwachse, beispielsweise fettsäurehaltige Polyamidwachse, die im Handel beispielsweise unter dem Namen Disparlon® erhältlich sind, in Frage.
Geeignet sind außerdem wachsartige Polysiloxane, wie z.B. Polydimethylsiloxane, Polydiphenylsiloxane oder modifizierte Silikone, z.B. Polyester-, Polyether- und Acrylat-modifizierte Silikone.
Die Verbindung (W) wird bevorzugt in einer Menge von 0,2 bis 2 Gew.-%, besonders bevorzugt von 0,5 bis 1,5 Gew.-%, jeweils bezogen auf das Gesamtgewicht des Basislacks, eingesetzt.
Vorteilhafte Basislacke werden insbesondere erhalten, wenn die Teilchen (N) und die Verbindung(en) (W) in solchen Mengen eingesetzt werden, dass die Gesamtmenge an anorganischen Teilchen (N) plus Wachs und/oder wachsartiger Verbindung (W) von 0,4 bis 4 Gew.-%, besonders bevorzugt von 1 bis 3 Gew.-%, beträgt, jeweils bezogen auf das Gesamtgewicht des Basislacks.
Vorteilhafterweise wird die Gesamtmenge an anorganischen Teilchen (N) plus Wachs und/oder wachsartiger Verbindung (W) auf den Gehalt an farbgebenden Pigmenten ohne den Gehalt an Metallicpigmenten abgestimmt. Je weniger farbgebende Pigmente der Basislack enthält, desto höher ist die Gesamtmenge an anorganischen Teilchen (N) plus Wachs und/oder wachsartiger Verbindung (W), da bei geringem Gehalt an farbgebenden Pigmenten im Allgemeinen der Flop wichtiger wird. Bei Beschichtungsmitteln, die keine Metallic- bzw. Effektpigmente enthalten, sogenannten Uni-Basislacken, wird ebenfalls die Kombination aus anorganischen Teilchen (N) plus Wachs und/oder wachsartiger Verbindung (W) eingesetzt, die in diesem Fall insbesondere stabilisierend wirkt, wobei hier aber im Allgemeinen geringere Gesamtmengen an anorganischen Teilchen (N) plus Wachs und/oder wachsartiger Verbindung (W) ausreichend sind.
Im Folgenden wird die Erfindung unter Bezugnahme auf Beispiele weiter erläutert.

## Beispiele

### 1. Herstellung der Klarlacke

#### 1.1. Herstellung einer Thixotropierpaste #1 (CC-T#1)

In einer Laborrührwerksmühle der Firma Vollrath wurden 730,0 g Mahlgut, bestehend aus 326,0 Gew.-Teilen eines Hydroxyl- und Carbamatgruppen enthaltenden Methacrylatcopolymerisats, 394,0 Gew.-Teilen Pentylacetat und 10,0 Gew.-Teilen Degussa Aerosil® 805 (pyrogene Kieselsäure der Firma Degussa AG), zusammen mit 1100,0 Gew.-Teilen Quarzsand (Korngröße 0.7-1 mm) eingewogen und unter Wasserkühlung während 30 min angerieben. Anschließend wurde von dem Quarzsand abgetrennt.

#### 1.2. Herstellung einer Thixotropierpaste #2 (CC-T#2)

In einer Laborrührwerksmühle der Firma Vollrath wurden 730,0 g Mahlgut, bestehend aus 326,0 Gew.-Teilen

eines Hydroxyl- und Carbamatgruppen enthaltenden Methacrylatcopolymerisats, 394,0 Gew.-Teilen Pentylacetat und 10,0 Gew.-Teilen Cab-o-Sil™ TS610 (hydrophobe Kieselsäure der Firma Cabot Corp.), zusammen mit 1100,0 Gew.-Teilen Quarzsand (Korngröße 0,7 - 1 mm) eingewogen und unter Wasserkühlung während 30 min angerieben. Anschließend wurde von dem Quarzsand abgetrennt.

**1.3. Herstellung des Stammlackes CC-V0 für die Klarlacke der erfindungsgemäßen Mehrschichtlackierung und Vergleichs-Klarlacke**

Für die Herstellung der Klarlacke der erfindungsgemäßem Mehrschichtlackierungen, CC-V3 und CC-V6, und der Klarlacke von nicht-erfindungsgemäßen Mehrschichtlackierungen, CC-V1, CC-V2, CC-V4 und CC-V5, wurde zunächst ein Stammlack CC-V0 durch Vermischen und Homogenisieren der folgenden Bestandteile hergestellt:

153,0 Gew.-Teile eines Hydroxyl- und Carbamatgruppen enthaltenden Methacrylatcopolymerisats,

228,0 Gew.-Teile eines Carbamat-Funktionsacrylats,

16,0 Gew.-Teile eines Epoxy-Acrylat-Bindemittels,

88,0 Gew.-Teile eines Methacrylatcopolymerisats,

100,0 Gew.-Teile eines handelsüblichen SCA-Acrylats,

42,0 Gew.-Teile der Thixotropierpaste #1 (CC-T#1) aus Herstellbeispiel 1.1.,

84,0 Gew.-Teile der Thixotropierpaste #2 (CC-T#2) aus Herstellbeispiel 1.2.,

101,0 Gew.-Teile eines handelsüblichen Hexamethoxymethyl-Melaminharzes,

22,0 Gew.-Teile Isobutanol,

2,0 Gew.-Teile eines handelsüblichen Zinn-Katalysators (Dibutylzinndiacetat),

3,0 Gew.-Teile Octansäure,

0,4 Gew.-Teile Phosphorsäure-n-butylester,

2,0 Gew.-Teile eines handelsüblichen Additivs zur Verbesserung der Thixotropie (52-prozentige Lösung von Polyhydroxycarboxylsäure-Amiden),

2,0 Gew.-Teile eines handelsüblichen, silikonfreien, polyesterbasierten Verlaufsadditivs,

2,0 Gew.-Teile eines handelsüblichen, silikonfreien Entlüfters (77-prozentige Lösung einer Kombination von Vinylethercopolymer und Acrylat),

9,0 Gew.-Teile eines handelsüblichen Hydroxyphenyltriazin-basierten UV-Absorbers,

5,0 Gew.-Teile eines handelsüblichen sterisch gehinderten Amins (HALS),

20,6 Gew.-Teile Pentylacetat,

Mischung von: 47,0 Gew.-Teilen Solventnaphta™ 180/210, 8,0 Gew.-Teilen eines handelsüblichen UV-Absorbers,

40,0 Gew.-Teile Butyldiglykolacetat.

**1.3.1. Herstellung eines Vergleichs-1K-Klarlackes CC-V1 (Vergleich mit unblockiertem DDBSA-Katalysator)**

Für die Herstellung des 1K-Klarlackes CC-V1 wurden 97,5 Gew.-Teile des Stammlacks CC-V0 aus dem Herstellbeispiel 1.3. mit 0,9 Gew.-Teilen eines handelsüblichen unblockierten Dodecylbenzolsulfonsäure- (DDBSA-) Katalysators (Nacure® 5076 der Firma King Industries, Inc.) versetzt und mit 4,0 Gew.-Teilen Xylol bei 23 °C auf eine Spritzviskosität von 48 sec im Ford Cup 3-Auslaufbecher eingestellt. Danach wies der 1 K-Klarlack CC-V1 einen Festkörpergehalt, bezogen auf das Gesamtgewicht des Klarlacks, von 53,7 Gew.-% auf (1 h/125 °C).

**1.3.2. Herstellung eines Vergleichs-1K-Klarlackes CC-V2 (Vergleich mit Aminblockiertem DDBSA-Katalysator)**

Für die Herstellung des 1K-Klarlackes CC-V2 wurden 97,5 Gew.-Teile des Stammlacks CC-V0 aus dem Herstellbeispiel 1.3. mit 2,5 Gew.-Teilen eines handelsüblichen Amin-blockierten Dodecylbenzolsulfonsäure- (DDBSA-) Katalysators (Nacure® 5225 der Firma King Industries, Inc.) versetzt und mit 5,0 Gew.-Teilen Xylol bei 23 °C auf eine Spritzviskosität von 48 sec im Ford Cup 3-Auslaufbecher eingestellt. Danach wies der 1K-Klarlack CC-V2 einen Festkörpergehalt, bezogen auf das Gesamtgewicht des Klarlacks, von 53,4 Gew.-% auf (1 h/125 °C).

**1.3.3. Herstellung des 1 K-Klarlackes CC-V3 (mit Epoxy-Isocyanat-blockiertem DDBSA-Katalysator nach Formel (II))**

Für die Herstellung des 1 K-Klarlackes CC-V3 wurden 97,5 Gew.-Teile des Stammlacks CC-V0 aus dem Herstellbeispiel 1.3. mit 2,5 Gew.-Teilen eines handelsüblichen Epoxy-Isocyanat-blockierten Dodecylbenzolsulfonsäure- (DDBSA)-Katalysators (Nacure® 55414 der Firma King Industries, Inc.) versetzt und mit 4,0 Gew.-Teilen Xylol bei 23 °C auf eine Spritzviskosität von 48 sec im Ford Cup 3-Auslaufbecher eingestellt. Danach wies der erfindungsgemäß einsetzbare 1 K-Klarlack CC-V3 einen Festkörpergehalt, bezogen auf das Gesamtgewicht des Klarlacks, von 53,1 Gew.-% auf (1 h/125°C).

**1.3.4. Herstellung eines Vergleichs-1K-Klarlackes CC-V4 (Vergleich mit unblockiertem p-TSA-Katalysator)**

Für die Herstellung des 1K-Klarlackes CC-V4 wurden 97,5 Gew.-Teile des Stammlacks CC-V0 aus dem Herstellbeispiel 1.3. mit 1,6 Gew.-Teilen eines handelsüblichen unblockierten para-Toluolsulfonsäure- (p-TSA-) Katalysators (K-Cure® 1040 der Firma King Industries, Inc.) versetzt und mit 5,0 Gew.-Teilen Xylol bei 23 °C auf eine Spritzviskosität von 48 sec im Ford Cup 3-Auslaufbecher eingestellt. Danach wies der nicht erfindungsgemäße 1K-Klarlack CC-V4 einen Festkörpergehalt, bezogen auf das Gesamtgewicht des Klarlacks, von 53,8 Gew.-% auf (1 h/125°C).

**1.3.5. Herstellung eines Vergleichs-1K-Klarlackes CC-V5 (Vergleich mit Aminblockiertem p-TSA-Katalysator)**

Für die Herstellung des 1K-Klarlackes CC-V5 wurden 97,5 Gew.-Teile des Stammlacks CC-V0 aus dem Herstellbeispiel 1.3. mit 2,5 Gew.-Teilen eines handelsüblichen Amin-blockierten para-Toluolsulfonsäure- (p-TSA-) Katalysators (Nacure® 2500 der Firma King Industries, Inc.) versetzt und mit 4,0 Gew.-Teilen Xylol bei 23 °C auf eine Spritzviskosität von 48 sec im Ford Cup 3-Auslaufbecher eingestellt. Danach wies der nicht erfindungsgemäße 1K-Klarlack CC-V5 einen Festkörpergehalt, bezogen auf das Gesamtgewicht des Klarlacks, von 53,8 Gew.-% auf (1 h/125°C).

**1.3.6. Herstellung des 1K-Klarlackes CC-V6 (mit Epoxy-blockiertem p-TSA-Katalysator nach Formel (I))**

Für die Herstellung des 1K-Klarlackes CC-V6 wurden 97,5 Gew.-Teile des Stammlacks CC-V0 aus dem Herstellbeispiel 1.3. mit 2,5 Gew.-Teilen eines handelsüblichen Epoxy-blockierten para-Toluolsulfonsäure- (p-TSA-) Katalysators (Cycat® VXK 6357 der Firma Cytec Surface Specialities) versetzt und mit 5,0 Gew.-Teilen Xylol bei 23 °C auf eine Spritzviskosität von 48 sec im Ford Cup 3-Auslaufbecher eingestellt. Danach wies der erfindungsgemäß einsetzbare 1 K-Klarlack CC-V6 einen Festkörpergehalt, bezogen auf das Gesamtgewicht des Klarlacks, von 53,4 Gew.-% auf (1 h/125 °C).

**2. Herstellung der Basislacke**

**2.1. Herstellung eines Acrylatbindemittels (BC-B)**

In einem Reaktor werden 13,2 Gew.-Teile Solvesso 100 vorgelegt und auf 167 °C erhitzt. Der Reaktor wird bei einem Druck im Reaktor von 0,35 bar über einen Zeitraum von 4 h simultan mit einer Monomerenmischung bestehend aus 2,1 Gew.-Teilen Acrylsäure, 10,8 Gew.-Teilen Hydroxyethylacrylat, 11,5 Gew.-Teilen 2-Ethylhexylacrylat, 11,5 Gew.-Teilen Butylacrylat und 14,3 Gew.-Teilen Styrol und einer Initiatormischung bestehend aus 0,7 Gew.-Teilen Di-tert.-Butylperoxid und 11,1 Gew.-Teilen einer Lösung von Dicumylperoxid in Solvesso 100 (50 %-ig), versetzt. Anschließend wird 1 h bei oben genannter Temperatur und Druck gehalten, bevor über einen Zeitraum von 1 h 21,5 Gew.-Teile Epsilon-Caprolacton zugegeben werden. Es wird auf 150 °C abgekühlt und 1,5 h bei einem Druck von 0,35 bar gehalten.

Das Reaktionsgemisch wird abgekühlt und mit 4,0 Gew.-Teilen Solvesso 100 auf einen Festkörper von 75 Gew.-%, bezogen auf das Gesamtgewicht des Bindemittels, eingestellt. Das so erhaltene Acrylatharz weist eine Säurezahl von 23 mg KOH/g und eine OH-Zahl von 73 mg KOH/g, jeweils bezogen auf den Festkörper, auf.

**2.2. Herstellung eines Trägerharzes (BC-1)**

In einem Reaktor werden 5,8 Gew.-Teile Xylol, 5,8 Gew.-Teile Toluol und 0,2 Gew.-Teile Methansulfonsäure vorgelegt und auf 104 °C erhitzt. Anschließend werden 80,6 Gew.-Teile 12-Hydroxystearinsäure dem Reaktor zugeführt und bei 171 °C im Rückfluss unter Entzug des Reaktionswassers gekocht. Die Reaktion ist bei Erreichung einer Säurezahl von 35 bezogen auf den 130 °C-Festkörpergehalt beendet. Nach Abkühlen wird der Festkörper mit 8,0 Gew.-Teilen Solventnaphtha auf 80,0 Gew.-Teile, bezogen auf das Gesamtgewicht der Trägerharz-Lösung, eingestellt.

**2.3. Herstellung von Polymermikroteilchen (BC-M)**

In einem Reaktor werden 43,2 Gew.-Teile Solventnaphtha, 0,08 Gew.-Teile N,N-Dimethylcocosamin und 1,0 Gew.-Teile Ethylacetat vorgelegt und auf 104 °C erhitzt. Der Reaktor wird bei einem Druck im Reaktor von 0,69 bar innerhalb von 2 h simultan mit einer Monomerenmischung bestehend aus 27,6 Gew.-Teilen Methylmethacrylat, 3,8 Gew.-Teilen 2-Hydroxypropylmethacrylat, 0,8 Gew.-Teilen Glycidylmethacrylat, 12,8 Gew.-Teilen des oben beschriebenen Trägerharzes (BC-1), 1,5 Gew.-Teilen Methacrylsäure und 1,5 Gew.-Teilen Octylmercaptan und einer Initiatormischung bestehend aus 2,3 Gew.-Teilen tert.-Butylperoxy-2-ethylhexanoat und 5,1 Gew.-Teilen Solventnaphtha versetzt. Anschließend wurde 3 h bei oben genannter Temperatur und Druck gehalten, bevor abgekühlt und mit 7,5 Gew.-Teilen Solventnaphtha auf einen Festkörper von 41,0 %, bezogen auf das Gesamtgewicht der Polymermikroteilchen-Lösung, eingestellt wird.

**2.4. Herstellung der anorganischen Teilchen, stabilisiert (BC-N)**

In einer Vorlage werden 10,0 Gew.-Teile des unter 2.1. beschriebenen Acrylatbindemittels, 6,0 Gew.-Teile Degussa Aerosil® 380 (handelsübliche hydrophile pyrogene Kieselsäure der Firma Degussa AG mit einer spezifischen Oberfläche (BET) von 380 $m^2/g$, einer mittleren Größe der Primärteilchen von 7 nm und einem $SiO_2$-Gehalt von mindestens 99,8 Gew.-%, bezogen auf die geglühte Substanz), 41,7 Gew.-Teile Solventnaphta, 41,7 Gew.-Teile Butylacetat und 0,6 Gew.-Teile eines Fettsäureesters als Stabilisierungsmittel (S) mit einem nichtflüchtigen Anteil von 96,2 % bei 2 h und 130 °C, bezogen auf das Gesamtgewicht des Stabilisierungsmittels, einer OH-Zahl von 50 mg KOH/g und einer Säurezahl von 17,2 mg KOH/g, jeweils bezogen auf den 130°C-Festkörpergehalt, enthaltend 6-Hydroxycapronsäure, Hydroxyvaleriansäure, Laurinsäure und Polyethylenglykol (beispielsweise das handelsübliche Benetzungsadditiv auf Basis von Fettsäueestern Solsperse 39000 der Firma Th. Goldschmidt) gemischt und dispergiert.

**2.5. Herstellung einer Wachsdispersion (BC-W)**

6,0 Gew.-Teile des Polyethylenwachses EVA 1 von der BASF AG (handelsübliches Polyethylenwachs auf Basis eines Ethylen/Vinylacetat-Copolymers mit einem Schmelzpunkt von 87-92 °C, einem Tropfpunkt nach Ubbelohde von ca. 95°C und

einem gewichtsmittleren Molekulargewicht von ca. 6500 g/mol) und 40,0 Gew.Teile Xylol werden unter langsamem Rühren bei 100 °C gelöst. Unter weiterem Rühren lässt man die Lösung auf 70 °C abkühlen und gibt langsam 54,0 Gew.-Teile Butylacetat (technisch, ca. 85 %-ig) zu, wobei eine erwünschte Wachsfällung beginnt. Unter weiterem Rühren lässt man die Dispersion weiter bis auf 35°C abkühlen.

**2.6. Herstellung einer Paste eines Aluminiumeffektpigmentes (BC-E)**

Die Paste wird aus 33,3 Gew.-Teilen einer handelsüblichen non-leafing Aluminiumeffektpigmentpaste vom Silberdollar-Typ mit einer mittleren Teilchengröße von 14 µm (Metallux 2192 der Firma Eckart), 33,3 Gew.-Teilen Butylacetat und 33,4 Gew.-Teilen des unter 2.1. beschriebenen Acrylatbindemittels (BC-B) unter Rühren hergestellt.

**2.7. Herstellung einer Aerosil-Paste (BC-A)**

In einer Laborrührwerksmühle der Firma Vollrath werden 100,0 g Mahlgut, bestehend aus 30,0 Gew.-Teilen des unter 2.1. beschriebenen Acrylatbindemittels (BC-B), 47,0 Gew.-Teilen Solventnaphtha 160/180, 10,0 Gew.-Teilen Butanol, 13,0 Gew.-Teilen Aerosil R805 (handelsübliches Aerosil der Firma Degussa) eingewogen und unter Wasserkühlung während 30 min angerieben. Anschließend wird von dem Quarzsand abgetrennt.

### 2.8. Herstellung einer Bariumsulfat-Paste (BC-BP)

In einer Laborrührwerksmühle der Firma Vollrath werden 100 g Mahlgut, bestehend aus 19,5 Gew.-Teilen des unter 2.1. beschriebenen Acrylatbindemittels (BC-B), 10,7 Gew.-Teilen Solventnaphtha 160/180, 0,6 Gew.-Teilen Bentone 34 (handelsübliches Rheologieadditiv der Firma Elementis Specialeties), 0,2 Gew.-Teilen Ethanol, 65,0 Gew.-Teilen Blanc Fixe Micro (handelsübliches Bariumsulfat der Firma Sachtleben) und 4,0 Gew.-Teilen Butylacetat eingewogen und unter Wasserkühlung während 30 min angerieben. Anschließend wird von dem Quarzsand abgetrennt.

### 2.9. Herstellung einer Weiß-Paste (BC-WP)

In einer Laborrührwerksmühle der Firma Vollrath wurden 800,0 g Mahlgut, bestehend aus 152,0 Gew.-Teilen des unter 2.1. beschriebenen Acrylatbindemittels (BC-B), 33,6 Gew.-Teilen Pentylpropionat, 6,4 Gew.-Teilen Bentone 34 und 528,0 Gew.-Teilen TiPure® R902 (handelsübliche Titandioxid der Firma DuPont de Nemours and Company), zusammen mit 1100,0 Gew.-Teilen Quarzsand (Korngröße 0,7-1 mm) eingewogen und unter Wasserkühlung während 30 min angerieben. Anschließend wurde von dem Quarzsand abgetrennt.

### 2.10. Herstellung einer CAB-Lösung (BC-C)

In einer Vorlage werden 76,0 Gew.-Teile Butylacetat mit 24,0 Gew.-Teilen CAB 551-0.2 (handelsübliche Celluloseacetobutyrat der Firma Eastman) für 30 min gemischt.

### 2.11. Herstellung des Stammlackes U-BC-V0 für die Uni-Basislacke der erfindungsgemäßen Mehrschichtlackierungen und Vergleich-Uni-Basislacke

Für die Herstellung der Uni-Basislacke U-BC-V3 und U-BC-V6 von erfindungsgemäßen Mehrschichtlackierungen und von Uni-Basislacken von nicht-erfindungsgemäßen Mehrschichtlackierungen, U-BC-V1, U-BC-V2, U-BC-V4 und U-BC-V5, wird zunächst ein Stammlack U-BC-V0 durch Vermischen und Homogenisieren der folgenden Bestandteile hergestellt:

18,0 Gew.-Teile der unter 2.3. beschriebenen Polymermikroteilchen (BM-M),

1,3 Gew.-Teile Pentylpropionat,

3,0 Gew.-Teile Butylacetat,

9,0 Gew.-Teile eines handelsüblichen Hexamethoxymethyl/Butyl-Melaminharzes,

0,1 Gew.-Teile eines handelsüblichen Benetzungsadditivs auf Polybutylacrylatharz-Basis,

3,5 Gew.-Teile der unter 2.7. beschriebenen Aerosil-Paste (BC-A),

4,6 Gew.-Teile der unter 2.8. beschriebenen $BaSO_4$-Paste (BC-BP),

40,0 Gew.-Teile der unter 2.9. beschriebenen Weiß-Paste (BC-WP),

12,5 Gew.-Teile des unter 2.1. beschriebenen Bindemittels (BC-B),

2,5 Gew.-Teile der unter 2.10. beschriebenen CAB-Lösung (BC-C),

0,5 Gew.-Teile eines handelsüblichen Hydroxyphenylbenztriazol-basierten UV-Absorbers,

0,3 Gew.-Teile Ethanol und

2,2 Gew.-Teile Butylacetat.

**2.11.1. Herstellung eines Uni-Basislackes U-BC-V1 (Vergleich mit unblockiertem DDBSA-Katalysator)**

Für die Herstellung des Uni-Basislackes U-BC-V1 wurden 97,5 Gew.-Teile des Stammiacks U-BC-V0 aus dem Herstellbeispiel 2.11 mit 0,9 Gew.-Teilen eines handelsüblichen unblockierten Dodecylbenzolsulfonsäure- (DDBSA-) Katalysators (Nacure® 5076 der Firma King Industries, Inc.) versetzt und mit 17,0 Gew.-Teilen Butylacetat bei 23 °C auf eine Spritzviskosität von 23 sec im Ford Cup 3-Auslaufbecher eingestellt. Danach wies der Basislack U-BC-V1 einen Festkörpergehalt, bezogen auf das Gesamtgewicht des Basislacks, von 51,7 Gew.-% auf (1 h/125°C).

**2.11.2. Herstellung eines Vergleichs-Uni-Basislackes U-BC-V2 (Vergleich mit Amin-blockiertem DDBSA-Katalysator)**

Für die Herstellung des Uni Basislackes U-BC-V2 wurden 97,5 Gew.-Teile des Stammlacks U-BC-V0 aus dem Herstellbeispiel 2.11 mit 2,5 Gew.-Teilen eines handelsüblichen Amin-blockierten Dodecylbenzolsulfonsäure- (DDBSA-) Katalysators (Nacure® 5225 der Firma King Industries, Inc.) versetzt und mit 18,0 Gew.-Teilen Butylacetat bei 23 °C auf eine Spritzviskosität von 23 sec im Ford Cup 3-Auslaufbecher eingestellt. Danach wies der nicht erfindungsgemäße Basislack U-BC-V2 einen Festkörpergehalt, bezogen auf das Gesamtgewicht des Basislacks, von 50,4 Gew.-% auf (1 h/125°C).

**2.11.3. Herstellung des Uni-Basislackes U-BC-V3 (mit Epoxy-Isocyanatblockiertem DDBSA-Katalysator nach Formel (II))**

Für die Herstellung des Uni-Basislackes U-BC-V3 wurden 97,5 Gew.-Teile des Stammlacks U-BC-V0 aus dem Herstellbeispiel 2.11 mit 2,5 Gew.-Teilen eines handelsüblichen Epoxy-Isocyanat-blockierten Dodecylbenzolsulfonsäure- (DDBSA-) Katalysators (Nacure® 5414 der Firma King Industries, Inc.) versetzt und mit 17,0 Gew.-Teilen Butylacetat bei 23 °C auf eine Spritzviskosität von 23 sec im Ford Cup 3-Auslaufbecher eingestellt. Danach wies der erfindungsgemäß einsetzbare Basislack U-BC-V3 einen Festkörpergehalt, bezogen auf das Gesamtgewicht des Basislacks, von 51,1 Gew.-% auf (1 h/125°C).

**2.11.4. Herstellung eines Vergleichs-Uni-Basislackes U-BC-V4 (Vergleich mit unblockiertem p-TSA-Katalysator)**

Für die Herstellung des Uni-Basislackes U-BC-V4 wurden 97,5 Gew.-Teile des Stammlacks U-BC-V0 aus dem Herstellbeispiel 2.11 mit 1,6 Gew.-Teilen eines handelsüblichen unblockierten para-Toluolsulfonsäure- (p-TSA-) Katalysators (K-Cure® 1040 der Firma King Industries, Inc.) versetzt und mit 17,0 Gew.-Teilen Butylacetat bei 23 °C auf eine Spritzviskosität von 23 sec im Ford Cup 3-Auslaufbecher eingestellt. Danach wies der Basislack U-BC-V4 einen Festkörpergehalt, bezogen auf das Gesamtgewicht des Basislacks, von 51,8 Gew.-% auf (1 h/125°C).

**2.11.5. Herstellung eines Vergleichs-Uni-Basislackes U-BC-V5 (Vergleich mit Amin-blockiertem p-TSA-Katalysator)**

Für die Herstellung des nicht erfindungsgemäßen Uni-Basislackes U-BC-V5 wurden 97,5 Gew.-Teile des Stammlacks U-BC-V0 aus dem Herstellbeispiel 2.11 mit 2,5 Gew.-Teilen eines handelsüblichen Amin-blockierten para-Toluolsulfonsäure- (p-TSA-) Katalysators (Nacure® 2500 der Firma King Industries, Inc.) versetzt und mit 17,0 Gew.-Teilen Butylacetat bei 23 °C auf eine Spritzviskosität von 23 sec im Ford Cup 3-Auslaufbecher eingestellt. Danach wies der nicht erfindungsgemäße Basislack U-BC-V5 einen Festkörpergehalt, bezogen auf das Gesamtgewicht des Basislacks, von 50,8 Gew.-% auf (1 h/125°C).

**2.11.6. Herstellung des Uni-Basislackes U-BC-V6 (mit Epoxy-blockiertem p-TSA-Katalysator nach Formel (I))**

Für die Herstellung des Uni-Basislackes U-BC-V6 wurden 97,5 Gew.-Teile des Stammlacks U-BC-V0 aus dem Herstellbeispiel 2.11 mit 2,5 Gew.-Teilen eines handelsüblichen Epoxy-blockierten para-Toluolsulfonsäure- (p-TSA-) Katalysators (Cycat® VXK 6357 der Firma Cytec Surface Specialities) versetzt und mit 17,0 Gew.-Teilen Butylacetat bei 23 °C auf eine Spritzviskosität von 23 sec im Ford Cup 3-Auslaufbecher eingestellt. Danach wies der erfindungsgemäß einsetzbare Basislack U-BC-V6 einen Festkörpergehalt, bezogen auf das Gesamtgewicht des Basislacks, von 51,4 Gew.-% auf (1 h/125°C).

**2.12. Herstellung des Stammlackes M-BC-V0 für die Metallic-Basislacke der erfindungsgemäßen Mehrschichtlackierung und Vergleich Metallic-Basislacke**

Für die Herstellung der Metallic-Basislacke der erfindungsgemäßen Mehrschichtlackierung, M-BC-V3 und M-BC-V6, und von Metallic-Basislacke von nicht-erfindungsgemäßen Mehrschichtlackierungen M-BC-V1, M-BC-V2, M-BC-V4 und M-BC-V5 wird zunächst ein Stammlack M-BC-V0 durch Vermischen und Homogenisieren der folgenden Bestandteile hergestellt:

10,0 Gew.-Teile der unter 2.5. beschriebenen Wachsdispersion (BC-W),

22,0 Gew.-Teile der unter 2.3. beschriebenen Polymermikroteilchen (BC-M),

11,5 Gew.-Teile eines handelsüblichen Hexamethoxymethyl/Butyl-Melaminharzes,

8,0 Gew.-Teile der unter 2.4. beschriebenen anorganischen Teilchen (BC-N),

0,5 Gew.-Teile eines handelsüblichen, silikonfreien Benetzungsadditivs auf Basis eines aminharzmodifizierten Acrylcopolymers,

0,5 Gew.-Teile eines handelsüblichen Hydroxyphenylbenztriazol-basierten UV-Absorbers,

21,0 Gew.-Teile des unter 2.1. beschriebenen Bindemittels (BC-B),

3,0 Gew.-Teile der unter 2.10. beschriebenen CAB-Lösung (BC-C),

20,4 Gew.-Teile der unter 2.6 beschriebenen Paste eines Aluminiumeffektpigments (BC-E) und

1,1 Gew.-Teile Butylacetat.

**2.12.1. Herstellung eines Vergleichs-Metallic-Basislackes M-BC-V1 (Vergleich mit unblockiertem DDBSA-Katalysator)**

Für die Herstellung des Metallic-Basislackes M-BC-V1 wurden 98,0 Gew.-Teile des Stammlacks M-BC-V0 aus dem Herstellbeispiel 2.12 mit 0,7 Gew.-Teilen eines handelsüblichen unblockierten Dodecylbenzolsulfonsäure- (DDBSA-) Katalysators (Nacure® 5076 der Firma King Industries, Inc.) versetzt und mit 2,0 Gew.-Teilen Butylacetat bei 23 °C auf eine Spritzviskosität von 23 sec im Ford Cup 3-Auslaufbecher eingestellt. Danach wies der Basislack M-BC-V1 einen Festkörpergehalt, bezogen auf das Gesamtgewicht des Basislacks, von 40,8 Gew.-% auf (1 h/125°C).

**2.12.2. Herstellung eines Vergleichs-Metallic-Basislackes M-BC-V2 (Vergleich mit Amin-blockiertem DDBSA-Katalysator)**

Für die Herstellung des Metallic-Basislackes M-BC-V2 wurden 98,0 Gew.-Teile des Stammlacks M-BC-V0 aus dem Herstellbeispiel 2.12 mit 2,0 Gew.-Teilen eines handelsüblichen Amin-blockierten Dodecylbenzolsulfonsäure- (DDBSA-) Katalysators (Nacure® 5225 der Firma King Industries, Inc.) versetzt und mit 2,0 Gew.-Teilen Butylacetat bei 23 °C auf eine Spritzviskosität von 23 sec im Ford Cup 3-Auslaufbecher eingestellt. Danach wies der nicht erfindungsgemäße Basislack M-BC-V2 einen Festkörpergehalt, bezogen auf das Gesamtgewicht des Basislacks, von 40,4 Gew.-% auf (1 h/125°C).

**2.12.3. Herstellung des Metallic-Basislackes M-BC-V3 (mit Epoxy-Isocyanatblockiertem DDBSA-Katalysator nach Formel (II))**

Für die Herstellung des Metallic-Basislackes M-BC-V3 wurden 98,0 Gew.-Teile des Stammlacks M-BC-V0 aus dem Herstellbeispiel 2.12 mit 2,0 Gew.-Teilen eines handelsüblichen Epoxy-Isocyanat-blockierten Dodecylbenzolsulfonsäure- (DDBSA-) Katalysators (Nacure® 5414 der Firma King Industries, Inc.) versetzt und mit 3,0 Gew.-Teilen Butylacetat bei 23 °C auf eine Spritzviskosität von 23 sec im Ford Cup 3-Auslaufbecher eingestellt. Danach wies der Basislack M-BC-V3 einen Festkörpergehalt, bezogen auf das Gesamtgewicht des Basislacks, von 40,1 Gew.-% auf (1 h/125°C).

**2.12.4. Herstellung eines Vergleichs-Metallic-Basislackes M-BC-V4 (Vergleich mit unblockiertem p-TSA-Katalysator)**

Für die Herstellung des Metallic-Basislackes M-BC-V4 wurden 98,0 Gew.-Teile des Stammlacks M-BC-V0 aus dem Herstellbeispiel 2.12 mit 1,3 Gew.-Teilen eines handelsüblichen unblockierten para-Toluolsulfonsäure- (p-TSA-) Katalysators (K-Cure® 1040 der Firma King Industries, Inc.) versetzt und mit 2,0 Gew.-Teilen Butylacetat bei 23 °C auf eine Spritzviskosität von 23 sec im Ford Cup 3-Auslaufbecher eingestellt. Danach wies der Basislack M-BC-V4 einen Festkörpergehalt, bezogen auf das Gesamtgewicht des Basislacks, von 41,1 Gew.-% auf (1 h/125°C).

**2.12.5. Herstellung eines Vergleichs-Metallic-Basislackes M-BC-V5 (Vergleich mit Amin-blockiertem p-TSA-Katalysator)**

Für die Herstellung des Metallic-Basislackes M-BC-V5 wurden 98,0 Gew.-Teile des Stammlacks M-BC-V0 aus dem Herstellbeispiel 2.12 mit 2,0 Gew.-Teilen eines handelsüblichen Amin-blockierten para-Toluolsulfonsäure- (p-TSA-) Katalysators (Nacure® 2500 der Firma King Industries, Inc.) versetzt und mit 2,0 Gew.-Teilen Butylacetat bei 23 °C auf eine Spritzviskosität von 23 sec im Ford Cup 3-Auslaufbecher eingestellt. Danach wies der Basislack M-BC-V5 einen Festkörpergehalt, bezogen auf das Gesamtgewicht des Basislacks, von 40,8 Gew.-% auf (1 h/125°C).

**2.11.6. Herstellung eines Metallic-Basislackes M-BC-V6 (mit Epoxy-blockiertem p-TSA-Katalysator nach Formel (I))**

Für die Herstellung des erfindungsgemäß einsetzbaren Metallic-Basislackes M-BC-V6 wurden 98,0 Gew.-Teile des Stammlacks M-BC-V0 aus dem Herstellbeispiel 2.12 mit 2,0 Gew.-Teilen eines handelsüblichen Epoxy-blockierten para-Toluolsulfonsäure (p-TSA-) Katalysators (Cycat® VXK 6357 der Firma Cytec Surface Specialities) versetzt und mit 4,0 Gew.-Teilen Butylacetat bei 23 °C auf eine Spritzviskosität von 23 sec im Ford Cup 3-Auslaufbecher eingestellt. Danach wies der Basislack M-BC-V6 einen Festkörpergehalt, bezogen auf das Gesamtgewicht des Basislacks, von 40,4 Gew.-% auf (1h/125°C).

**3. Versuchsergebnisse**

**3.1. Lagerstabilitätsprüfung der Klarlacke sowie der Uni- und Metallic-Basislacke**

Von den Beispiellacken CC-V1 bis CC-V6, U-BC-V1 bis U-BC-V6 und M-BC-V1 bis M-BC-V6 wurde die Lagerstabilität durch Lagerung dieser Beispiellacke von 3 Tagen bei einer Temperatur von 60 °C mittels Messung der Auslaufviskosität im Ford Cup 3 bei 23°C vor und nach Lagerung bestimmt. Die Ergebnisse sind in Tabelle 1 dargestellt.

**Tabelle 1:** Viskosität der Beispiellacken CC-V1 bis CC-V6, U-BC-V1 bis U-BC-V6 und M-BC-V1 bis M-BC-V6 vor und nach Lagerung von 3 Tagen bei einer Temperatur von 60 °C.

| Beispiellack | | Viskosität vor Lagerung | Viskosität nach Lagerung |
|---|---|---|---|
| CC-V1 | Unblockierte DDBSA | 48 sec | 256 sec |
| CC-V2 | Amin-blockierte DDBSA | 48 sec | 83 sec |
| CC-V3 | Epoxy-Isocyanat-blockierte DDBSA | 48 sec | 79 sec |
| CC-V4 | Unblockierte p-TSA | 48 sec | 280 sec |
| CC-V5 | Amin-blockierte p-TSA | 48 sec | 96 sec |
| CC-V6 | Epoxy-blockierte p-TSA | 48 sec | 93 sec |
| U-BC-V1 | Unblockierte DDBSA | 23 sec | 301 sec |
| U-BC-V2 | Amin-blockierte DDBSA | 23 sec | 33 sec |
| U-BC-V3 | Epoxy-Isocyanat-blockierte DDBSA | 23 sec | 31 sec |
| U-BC-V4 | Unblockierte p-TSA | 23 sec | 245 sec |
| U-BC-V5 | Amin-blockierte p-TSA | 23 sec | 29 sec |

(fortgesetzt)

| Beispiellack | | Viskosität vor Lagerung | Viskosität nach Lagerung |
|---|---|---|---|
| U-BC-V6 | Epoxy-blockierte p-TSA | 23 sec | 34 sec |
| M-BC-V1 | Unblockierte DDBSA | 23 sec | 209 sec |
| M-BC-V2 | Amin-blockierte DDBSA | 23 sec | 35 sec |
| M-BC-V3 | Epoxy-isocyanat-blockierte DDBSA | 23 sec | 33 sec |
| M-BC-V4 | Unblockierte p-TSA | 23 sec | 222 sec |
| M-BC-V5 | Amin blockierte p-TSA | 23 sec | 31 sec |
| M-BC-V6 | Epoxy blockierte p-TSA | 23 sec | 34 sec |

Die Beispiellacke mit unblockierten Katalysatoren zeigen einen deutlichen Nachteil in der Lagerstabilität. Die Lacke mit Amin-blockierten Katalysatoren und die mit Epoxy-(Isocyanat)-blockierten Katalysatoren zeigen nur einen geringfügigen Viskositätsanstieg bei Lagerung.

3.2. **Herstellung** von **Mehrschichtlackierungen V1 bis V24**

Für die Prüfung der farbmetrischen Eigenschaften der Beispiellacke CC-V1 bis CC-V6, U-BC-V1 bis U-BC-V6 und M-BC-V1 bis M-BC-V6 wurden in üblicher und bekannter Weise Prüftafeln der Abmessungen 10 cm x 20 cm hergestellt. Hierzu wurden Coil beschichtete Tafeln mit einem handelsüblichen konventionellen, weißen bzw. grauen Füller auf Polyester-Basis der Firma BASF Coatings AG beschichtet, wonach die resultierenden Füllerschichten für 5 min bei 20 °C und einer relativen Luftfeuchtigkeit von 65 % abgelüftet und in einem Umluftofen für 5 min bei 165°C Objekttemperatur eingebrannt.

Die Prüftafeln mit weißem Füller wurden für die Lackierung der Uni Basislacken U-BC, die Prüftafeln mit grauem Füller wurden für die Metallic-Basislacke M-BC verwendet.

**3.2.1. Herstellung der Mehrschichtlackierung V1 bis V6**

Nach dem Abkühlen der Prüftafeln auf 20 °C wurde in einer ersten Serie die Uni-Basislacke U-BC-V1 bis U-BC-V6 durch ESTA-Einmalauftrag mit einer Trockenfilmschichtdicke von 25 μm appliziert. Anschließend wurden die Basislackschichten während 5 Minuten abgelüftet und mit den Klarlacken CC-V1 bis CC-V6 mit einer Trockenfilmschichtdicke von ca. 45 μm überschichtet. In dieser Serie wurde der Basislack U-BC-V1 mit Klarlack CC-V1 kombiniert und ergab Mehrschichtlackierung V1, Basislack U-BC-V2 mit Klarlack CC-V2 ergab Mehrschichtlackierung V2 usw. Hiernach wurden die Basislackschichten und die Klarlackschichten während 10 min bei 140 °C Objekttemperatur eingebrannt. Eine zweite Serie von Prüftafeln wurde 10 min bei 160 °C Objekttemperatur überbrannt.

**3.2.2. Herstellung der Mehrschichtlackierung V7 bis V12**

In einer zweiten Serie wurden auf die Prüftafeln mit grauem Füller die Basislacke M-BC-V1 bis M-BC-V6 durch ESTA-Doppelauftrag mit einer Trockenfilmschichtdicke von 18 μm aufgetragen. Anschließend wurden die Basislackschichten während 5 min abgelüftet und mit den Klarlacken CC-V1 bis CC-V6 mit einer Trockenfilmschichtdicke von ca. 45 μm überschichtet. In dieser Serie wurde der Basislack M-BC-V1 mit Klarlack CC-V1 kombiniert und ergab Mehrschichtlackierung V7, Basislack M-BC-V2 mit Klarlack CC-V2 ergab Mehrschichtlackierung V8 usw. Danach wurden die Basislackschichten und die Klarlackschichten während 10 min bei 140 °C Objekttemperatur eingebrannt. Eine gleiche Serie von Prüftafeln wurde 10 min bei 160 °C Objekttemperatur überbrannt.

**3.2.3. Herstellung der Mehrschichtlackierung V13 bis V18**

In einer dritten Serie wurden auf die Prüftafeln mit weißem Füller die Basislacken U-BC-V1 bis U-BC-V6 durch ESTA-Einmalauftrag mit einer Trockenfilmschichtdicke von 25 μm aufgetragen. Anschließend wurden die Basislackschichten während 5 Min abgelüftet und mit dem Klarlack CC-V2 mit einer Trockenfilmschichtdicke von ca. 45 μm überschichtet. In dieser Serie wurde der Basislack U-BC-V1 mit Klarlack CC-V2 kombiniert und ergab Mehrschichtlackierung V13, Basislack U-BC-V2 mit Klarlack CC-V2 ergab Mehrschichtlackierung V14 usw. Danach wurden die Basislackschichten und die Klarlackschichten während 10 min bei 140 °C Objekttemperatur eingebrannt. Eine zweite Serie von Prüftafeln wurde 10 min bei 160 °C Objekttemperatur überbrannt.

### 3.2.4. Herstellung der Mehrschichtlackierung V19 bis V24

In einer vierten Serie wurden auf die Prüftafeln mit weißem Füller der Basislack U-BC-V2 durch ESTA-Einmalauftrag mit einer Trockenfilmschichtdicke von 25 $\mu$m aufgetragen. Anschließend wurden die Basislackschichten während 5 Min abgelüftet und mit den Klarlacken CC-V1 bis CC-V6 mit einer Trockenfilmschichtdicke von ca. 45 $\mu$m überschichtet. In dieser Serie wurde der Basislack U-BC-V2 mit Klarlack CC-V1 kombiniert und ergab Mehrschichtlackierung V19, Basislack U-BC-V2 mit Klarlack CC-V2 ergab Mehrschichtlackierung V20 usw. Danach wurden die Basislackschichten und die Klarlackschichten während 10 min bei 140 °C Objekttemperatur eingebrannt. Eine zweite Serie von Prüftafeln wurde 10 min bei 160 °C Objekttemperatur überbrannt.

Die Mehrschichtlackierungen V3, V6, V9, und V12 sind hierbei die erfindungsgemäßen Mehrschichtlackierungen. Die anderen Kombinationen resultierten in den nicht erfindungsgemäßen Mehrschichtlackierungen der Vergleichsversuche.

### 3.3. Prüfung der erhaltenen Mehrschichtlackierungen V1 bis V24

Die Mehrschichtlackierungen **V1** und V24 wurden mit Hilfe eines Spektralphotometers der Firma X-Rite (MA68 II Multi-Angle Spectrophotometer) vermessen und die Vergilbungszahl db* aufgenommen. Als Farbtonreferenz wurde für die Mehrschichtlackierungen V1 bis V6 die Mehrschichtlackierung V1, eingebrannt bei 140 °C, herangezogen. Für V7 bis V12 wurde V7, eingebrannt bei 140 °C, für V13 bis V18 wurde V13, eingebrannt bei 140 °C, und für V19 bis V24 wurde V19, eingebrannt bei 140 °C, eingesetzt.

Für die Metallic-Mehrschichtlackierungen ermittelten relativen Vergilbungswerte wurde der Mittelwert der Betrachtungswinkel 15°, 25°, 45°, 75° und 110° herangezogen, und nach der Formel:

$$db^*_{15\text{-}110} = ((b^*_{15}{}^{p} - b^*_{15}{}^{r}) + (b^*_{25}{}^{p} - b^*_{25}{}^{r}) + (b^*_{45}{}^{p} - b^*_{45}{}^{r}) + (b^*_{75}{}^{p} - b^*_{75}{}^{r}) + (b^*_{110}{}^{p} - b^*_{110}{}^{r}))/5$$

berechnet. In der Formel ist Referenz r der Mehrschichtlackierung V7 bei 140 °C eingebrannt und Probe p der Versuch V7 bis V12.

Für Uni-Weiß-Farbtöne ist eine Vergilbung db* 0,5 deutlich visuell sichtbar.

Die Vergilbungsergebnisse sind in Tabelle 2 angeführt.

**Tabelle 2:** Vergilbungszahlen der Mehrschichtlackierungen V1 bis V24.

| Mehrschichtlackierung | | Basislack | | Klarlack | Vergilbungszahl (140 °C) | Vergilbungszahl (160 °C) |
|---|---|---|---|---|---|---|
| V1 | = | U-BC-V1 | + | CC-V1 | Referenz | 0,5 |
| V2 | = | U-BC-V2 | + | CC-V2 | 1,2 | 2,1 |
| V3 | = | U-BC-V3 | + | CC-V3 | 0,1 | 0,7 |
| V4 | = | U-BC-V4 | + | CC-V4 | 0,2 | 0,7 |
| V5 | = | U-BC-V5 | + | CC-V5 | 1,4 | 2,5 |
| V6 | = | U-BC-V6 | + | CC-V6 | 0,2 | 0,6 |
| V7 | = | M-BC-V1 | + | CC-V1 | Referenz | 0,3 |
| V8 | = | M-BC-V2 | + | CC-V2 | 0,5 | 0,9 |
| V9 | = | M-BC-V3 | + | CC-V3 | 0,1 | 0,3 |
| V10 | = | M-BC-V4 | + | CC-V4 | 0,0 | 0,2 |
| V11 | = | M-BC-V5 | + | CC-V5 | 0,5 | 1,1 |
| V12 | = | M-BC-V6 | + | CC-V6 | 0,0 | 0,3 |
| V13 | = | U-BC-V1 | + | CC-V2 | Referenz | 0,8 |
| V14 | = | U-BC-V2 | + | CC-V2 | 0,8 | 1,7 |

(fortgesetzt)

| Mehrschichtlackierung Basislack | | | | Klarlack | Vergilbungszahl (140 °C) | Vergilbungszahl (160 °C) |
|---|---|---|---|---|---|---|
| V15 | = | U-BC-V3 | + | CC-V2 | 0,1 | 1,1 |
| V16 | = | U-BC-V4 | + | CC-V2 | 0,2 | 1,2 |
| V17 | = | U-BC-V5 | + | CC-V2 | 1,2 | 2,3 |
| V18 | = | U-BC-V6 | + | CC-V2 | 0,2 | 1,2 |
| V19 | = | U-BC-V2 | + | CC-V1 | Referenz | 1,0 |
| V20 | = | U-BC-V2 | + | CC-V2 | 0,7 | 1,8 |
| V21 | = | U-BC-V2 | + | CC-V3 | 0,1 | 1,3 |
| V22 | = | U-BC-V2 | + | CC-V4 | 0,1 | 1,4 |
| V23 | = | U-BC-V2 | + | CC-V5 | 1,1 | 2,4 |
| V24 | = | U-BC-V2 | + | CC-V6 | 0,3 | 1,5 |

Die in der **Tabelle 2** zusammengestellten Ergebnisse untermauern, dass die erfindungsgemäße Mehrschichtlackierungen V3, V6, V9 und V12 sowohl bei 140°C als auch bei einer Überbrennungstemperatur von 160 °C kaum eine Vergilbung aufweisen. Zusätzlich zeichnen sich diese Mehrschichtlackierungen durch eine gute Lagerstabilität aus (siehe oben).

Für die nicht-erfindungsgemäßen Mehrschichtlackierungen V2, V5, V8 und V11 sind hohe Vergilbungszahlen ermittelt worden. Die nicht-erfindungsgemäßen Mehrschichtlackierungen V1, V4, V7 und V10 zeigen zwar gute Vergilbungswerte, weisen jedoch eine schlechte Lagerstabilität auf.

Die nicht-erfindungsgemäßen Mehrschichtlackierungen V13 bis V24, bei denen entweder nur der Basislack oder nur der Klarlack eine Verbindung der Formel (I) oder (II) enthalten, zeigen bei einer Temperatur von 140 °C sehr gute Vergilbungsergebnisse. Werden diese Mehrschichtlackierungen jedoch überbrannt (160 °C), steigen die Vergilbungszahlen deutlich an.

Demzufolge weisen nur die erfindungsgemäßen Mehrschichtlackierungen eine geringe Vergilbung bei einer Überbrennung der Lackierung (160 °C) bei gleichzeitig guter Lagerstabilität auf.

## Patentansprüche

**1.** Mehrschichtlackierung, umfassend

i. mindestens eine Basisiackierung eines nicht-wässrigen Basislacks mit einem Festkörperantell von mindestens 35 Gew.-%, bezogen auf das Gesamtgewicht des Basislacks, und
ii. mindestens eine Klarlackierung eines nicht-wässrigen Klarlacks mit einem Festkörperanteil von mindestens 50 Gew.-%, bezogen auf das Gesamtgewicht des Klarlacks,

**dadurch gekennzeichnet, dass** In dem Basislack und dem Klarlack je 0,5 bis 3,0 Gew.-%, bezogen auf das Gesamtgewicht des jeweiligen Lacks,

A. mindestens einer Epoxy-Sulfonsäure-Verbindung der Formel (I)

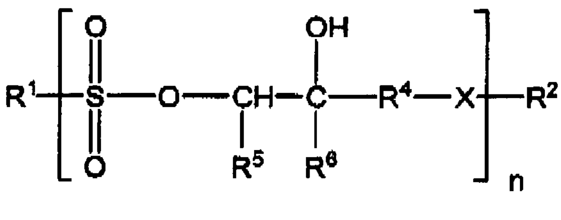

(I),

worin

n 1 bis 10 ist,

$R^1$ einen mono- oder divalenten Alkyl- oder Alkylenrest mit 1 bis 18 C-Atomen oder einen mit je 1 bis 18 C-Atomen mono- oder dialkylierten Phenyl- oder Naphthyl-Rest darstellt,

$R^5$ und $R^8$ unabhängig voneinander ein Wasserstoffatom oder einen Alkylrest mit 1 bis 12 C-Atomen oder $R^5$ und $R^6$ zusammen einen Cycloalkylrest mit 6 bis 12 C-Atomen darstellen,

sowie entweder

a. $R^4$ ein Wasserstoffatom bedeutet und die Reste $R^2$ und X entfallen, oder

b. $R^4$ einen Methylen-Rest,

$R^2$ ein Wasserstoffatom, einen mono- oder multivalenten Alkylrest mit 1 bis 18 C-Atomen, einen Bisphenol A- oder Bisphenol F-Rest, wobei die Reste substituiert sein können, und

X eine Carbonylgruppe oder ein Sauerstoffatom bedeuten, wobei X optional ist,

wobei die Verbindung nach Formel (I)ein zahlenmittleres Molekulargewicht von 350 bis 2000 g/mol aufweist und bei n > 1 mindestens einer der Reste $R^1$ oder $R^2$ mindestens divalent ist, oder

B. mindestens einer Epoxy-Isocyanat-blockierten Sulfonsäura-Verbindung der Formel (II)

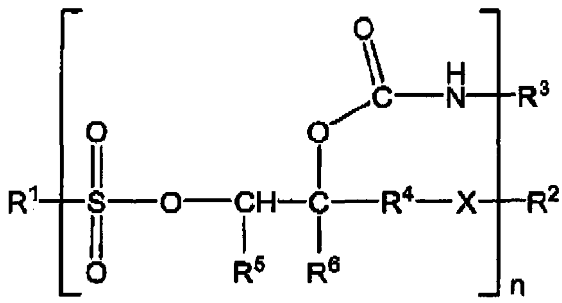

(II),

worin $R^1$, $R^2$, $R^4$, $R^5$, $R^6$, X und n die gleiche Bedeutung wie in der Verbindung der Formel (I)haben und

$R^3$ ein Alkyl-, Alkenyl-, Cycloalkyl- oder Aryl-Rest mit 1 bis 18 C-Atomen oder ein Polymerrest, welche substituiert sein können, ist, wobei bei n > 1 mindestens einer der Reste $R^1$, $R^2$ oder $R^3$ mindestens divalent ist,

wobei die Verbindung nach Formel (II) ein zahlenmittleres Molekulargewicht von mindestens 1000 g/mol aufweist,

enthalten ist.

2. Mehrschlchtlacklerung nach Anspruch 1, **dadurch gekennzeichnet, dass** mindestens ein Basis- oder Klarlack mindestens eine Verbindung der Formeln (I) oder (II) mit n gleich 1 bis 5 enthält

3. Mehrschichtlackierung nach einem der vorherigen Ansprüche, **dadurch gekennzeichnet, dass** der Basislack und/oder der Klarlack, jeweils unabhängig voneinander, je 1,5 bis 3,0 Gew.-% mindestens einer Verbindung nach Formel (I) und/oder (II), bezogen auf die Gesamtgewicht des jewelligen Lacks, enthält.

4. Mehrschichtlackierung nach Anspruch 1 oder 2, **dadurch gekennzeichnet, dass** der Basislack und/oder der Klarlack, jeweils unabhängig voneinander, je 1,8 bis 2,7 Gew.-% mindestens einer Verbindung nach Formel (I)und/oder (II), bezogen auf die Gesamtgewicht des jeweiligen Lacks, enthält.

5. Mehrschichtlackierung nach einem der vorherigen Ansprüche, **dadurch gekennzeichnet, dass** der Basislack zusätzlich enthält

a. 15 - 50 Gew.-% mindestens eines Bindemittels,

b. 5 - 30 Gew.-% mindestens eines Melaminharz-Derivats als Vernetzungsmittel,

c. 0,5 bis 49 Gew.-% mindestens eines Farbmittels,

d. 30 - 65 Gew.-% mindestens eines organischen Lösemittels,

e. 0,06 - 40 Gew.-% mindestens eines Hilfs- oder Zusatzstoffs,

jeweils bezogen auf das Gesamtgewicht des Basislacks, wobei sich die Gewichtsanteile aller Bestandteile des Basislacks zu 100 % addieren.

6. Mehrschichtlackierung nach Anspruch 5, **dadurch gekennzeichnet, dass** der Basislack als Zusatzstoff mindestens einen Bestandtell enthält, der ausgewählt ist aus der Gruppe der Polymermikroteilchen, der anorganischen Teilchen, der Wachse und der wachsartigen Verbindungen.

7. Mehrschichtlacklerung nach einem der vorherigen Ansprüche, **dadurch gekennzeichnet, dass** der Klarlack zusätzlich enthält

   a. 15 - 50 Gew.-% mindestens eines Bindemittels,
   b. 5 - 30 Gew.-% mindestens eines Melaminharz-Derivats als Vernetzungsmittel,
   c. 30 - 50 Gew.-% mindestens eines organischen Lösemittels.
   d. 0,05 - 40 Gew.-% mindestens eines Hilfs- oder Zusatzstoffs,

   jeweils bezogen auf das Gesamtgewicht des Klarlacks, wobei sich die Gewichtsanteile aller Bestandteile des Klarlacks zu 100 % addieren.

8. Mehrschichtlacklerung nach einem der vorherigen Ansprüche, **dadurch gekennzeichnet, dass** mindestens eine weitere Basislackierung eines Basislacks mit einem Festkörpergehalt von mindestens 35 Gew.-%, bezogen auf das Gesamtgewicht des jeweiligen Lacks, umfasst ist, welcher eine oder mehrere, gleiche oder verschiedene Verbindungen nach Formel (I)und/oder (II) enthält.

9. Mehrschichtlackierung nach einem der vorherigen Ansprüche, **dadurch gekennzeichnet, dass** mindestens eine weitere Basislackierung eines Basislacks BI umfasst ist, der weder Verbindungen nach Formel (I)noch Verbindungen nach Formel (II) enthält.

10. Verfahren zur Herstellung von Mehrschichtlackierungen nach einem der vorherigen Ansprüche, **dadurch gekennzeichnet, dass** in der Reihenfolge

   a. zunächst mindestens ein Basislack mit einem Festkörperanteil von mindestens 35 Gew.-%, bezogen auf das Gesamtgewicht des Basislacks, und anschließend
   b. mindestens ein Klarlack mit einem Festkörperanteil von mindestens 50 Gew.-%, bezogen auf das Gesamtgewicht des Klarlacks,

   auf ein Substrat appliziert werden, wobei in dem Basislack und dem Klarlack je 0,5 bis 3,0 Gew.-%, bezogen auf das Gesamtgewicht des jeweiligen Lacks, mindestens einer Verbindung der Formel (I) oder mindestens eine Verbindung der Formel (II) enthalten ist.

11. Verfahren zur Herstellung von Mehrschichtlackierungen nach Anspruch 10, **dadurch gekennzeichnet, dass** in der Reihenfolge

   a. zunächst mindestens ein Basislack BI, der weder Verbindungen nach Formel (I) noch Verbindungen nach Formel (II) enthält,
   b. anschließend mindestens ein Basislack mit einem Festkörperanteil von mindestens 35 Gew.-%, bezogen auf das Gesamtgewicht des Basislacks, und
   c. danach mindestens ein Klarlack mit einem Festkörperanteil von mindestens 50 Gew.-%, bezogen auf das Gesamtgewicht des Klarlacks,

   auf ein Substrat appliziert werden, wobei in dem zweiten Basislack und dem Klarlack je 0,5 bis 3,0 Gew.-%, bezogen auf das Gesamtgewicht des jeweiligen Lacks, mindestens einer Verbindung der Formel (I)oder mindestens eine Verbindung der Formel (II) enthalten sind.

12. Verwendung von Sulfonsäureverbindungen der Formel (I) und/oder (II) gemäß Ausprucb 1 als Katalysator sowohl in nicht wässrigen Basislacken mit einem Festkörpergehalt von mindestens 35 Gew.-%, bezogen auf das Gesamtgewicht des Basislacks, als auch in nicht-wässrigen Klarlacken mit einem Festkörpergehalt von mindestens 50 Gew.-%, bezogen auf das Gesamtgewicht des Klarlacks, für die Herstellung von Mehrschichtlacklerungen.

**13.** Substrate aus Metall und/oder Kunststoff, lackiert mit der Mehrschichtlackierung nach einem der Ansprüche 1 bis 9.

**14.** Verwendung von Mehrschichtlackierungen nach einem der Ansprüche 1 bis 9 zur Automobilserienlackierung, der Nutzfahrzeug- und der Autoreparatur-Lackierung, für die Beschichtung von Bauteilen für den Schiff- und Flugzeugbau oder von Bauteilen für Haushalts- und Elektrogeräte oder deren Teile.

## Claims

**1.** Multicoat paint system comprising

i. at least one basecoat of a nonaqueous basecoat material having a solids fraction of at least 35% by weight, based on the total weight of the basecoat material, and
ii. at least one clearcoat of a nonaqueous clearcoat material having a solids fraction of at least 50% by weight, based on the total weight of the clearcoat material,

**characterized in that** the basecoat material and the clearcoat material each contain 0.5% to 3.0% by weight, based on the total weight of the respective coating material,

A. of at least one epoxy-sulfonic acid compound of the formula (I)

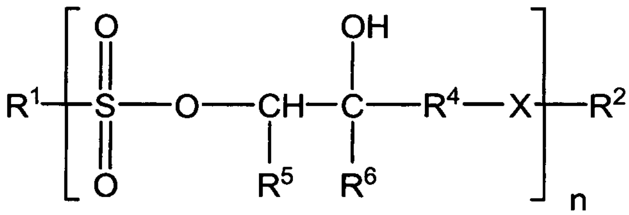

(I)

in which
n is 1 to 10,
$R^1$ is a monovalent or divalent alkyl or alkylene radical having 1 to 18 C atoms or is a monoalkylated or dialkylated phenyl or naphthyl radical having in each case 1 to 18 C atoms,
$R^5$ and $R^6$ independently are a hydrogen atom or an alkyl radical having 1 to 12 C atoms, or $R^5$ and $R^6$ together are a cycloalkyl radical having 6 to 12 C atoms,
and either

a. $R^4$ is a hydrogen atom and the radicals $R^2$ and X are absent, or
b. $R^4$ is a methylene radical,
$R^2$ is a hydrogen atom, a monovalent or polyvalent alkyl radical having 1 to 18 C atoms, a bisphenol A radical or bisphenol F radical, it being possible for the radicals to be substituted, and
X is a carbonyl group or an oxygen atom, X being optional,

the compound according to formula (I) having a number-average molecular weight of 350 to 2000 g/mol, and, where n > 1, at least one of the radicals $R^1$ or $R^2$ is at least divalent, or
B. of at least one epoxy-isocyanate-blocked sulfonic acid compound of the formula (II)

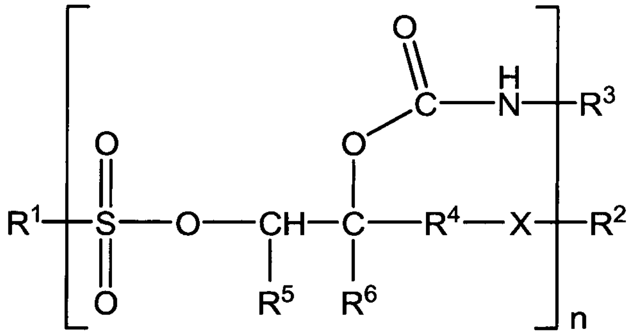

(II)

in which $R^1$, $R^2$, $R^4$, $R^5$, $R^6$, X, and n have the same definition as in the compound of the formula (I) and $R^3$ is an alkyl, alkenyl, cycloalkyl or aryl radical having 1 to 18 C atoms or is a polymer radical, which may be substituted, and, where n > 1, at least one of the radicals $R^1$, $R^2$ or $R^3$ is at least divalent,
the compound according to formula (II) having a number-average molecular weight of at least 1000 g/mol.

2. Multicoat paint system according to Claim 1, **characterized in that** at least one basecoat or clearcoat material comprises at least one compound of the formulae (I) or (II) with n being 1 to 5.

3. Multicoat paint system according to either of the preceding claims, **characterized in that** the basecoat material and/or the clearcoat material, in each case independently of one another, each contains 1.5% to 3.0% by weight of at least one compound according to formula (I) and/or (II), based on the total weight of the coating material in question.

4. Multicoat paint system according to Claim 1 or 2, **characterized in that** the basecoat material and/or the clearcoat material, in each case independently of one another, each contains 1.8% to 2.7% by weight of at least one compound according to formula (I) and/or (II), based on the total weight of the coating material in question.

5. Multicoat paint system according to any of the preceding claims, **characterized in that** the basecoat material additionally contains

   a. 15% - 50% by weight of at least one binder,
   b. 5% - 30% by weight of at least one melamine resin derivative as crosslinking agent,
   c. 0.5% to 49% by weight of at least one colorant,
   d. 30% - 65% by weight of at least one organic solvent,
   e. 0.05% - 40% by weight of at least one auxiliary or additive,

   based in each case on the total weight of the basecoat material, the weight fractions of all of the constituents of the basecoat material adding to 100%.

6. Multicoat paint system according to Claim 5, **characterized in that** the basecoat material comprises as additive at least one constituent selected from the group consisting of polymer microparticles, inorganic particles, waxes, and waxlike compounds.

7. Multicoat paint system according to any of the preceding claims, **characterized in that** the clearcoat material additionally contains

   a. 15% - 50% by weight of at least one binder,
   b. 5% - 30% by weight of at least one melamine resin derivative as crosslinking agent,
   c. 30% - 50% by weight of at least one organic solvent,
   d. 0.05% - 40% by weight of at least one auxiliary or additive,

   based in each case on the total weight of the clearcoat material, the weight fractions of all of the constituents of the clearcoat material adding to 100%.

8. Multicoat paint system according to any of the preceding claims, **characterized in that** at least one further basecoat of a basecoat material having a solids content of at least 35% by weight, based on the total weight of the respective

coating material, is included which comprises one or more identical or different compounds according to formula (I) and/or (II).

**9.** Multicoat paint system according to any of the preceding claims, **characterized in that** at least one further basecoat of a basecoat material BI is included which contains neither compounds according to formula (I) nor compounds according to formula (II).

**10.** Method of producing multicoat paint systems according to any of the preceding claims, **characterized in that** said method comprises applying, in this order

a.first at least one basecoat material having a solids fraction of at least 35% by weight, based on the total weight of the basecoat material, and subsequently
b. at least one clearcoat material having a solids fraction of at least 50% by weight, based on the total weight of the clearcoat material,

to a substrate, the basecoat material and the clearcoat material each containing 0.5% to 3.0% by weight, based on the total weight of the respective coating material, of at least one compound of the formula (I) or at least one compound of the formula (II).

**11.** Method of producing multicoat paint systems according to Claim 10, **characterized in that** said method comprises applying, in this order

a. first at least one basecoat material BI which contains neither compounds according to formula (I) nor compounds according to formula (II),
b. subsequently at least one basecoat material having a solids fraction of at least 35% by weight, based on the total weight of the basecoat material, and
c. thereafter at least one clearcoat material having a solids fraction of at least 50% by weight, based on the total weight of the clearcoat material,

to a substrate, the second basecoat material and the clearcoat material each containing 0.5% to 3.0% by weight, based on the total weight of the respective coating material, of at least one compound of the formula (I) or at least one compound of the formula (II).

**12.** Use of sulfonic acid compounds of the formula (I) and/or (II) according to Claim 1 as a catalyst both in nonaqueous basecoat materials having a solids content of at least 35% by weight, based on the total weight of the basecoat material, and in nonaqueous clearcoat materials having a solids content of at least 50% by weight, based on the total weight of the clearcoat material, for producing multicoat paint systems.

**13.** Substrates of metal and/or plastic, coated with the multicoat paint system according to any of Claims 1 to 9.

**14.** Use of multicoat paint systems according to any of Claims 1 to 9 for automotive OEM finishing, for utility vehicle finishing and automotive refinish, for the coating of components for boatbuilding and aircraft construction or of components for household and electrical appliances or parts thereof.

## Revendications

**1.** Revêtement de peinture multicouche, comprenant

I. au moins un revêtement de peinture de fond consistant en une peinture de fond non aqueuse ayant une teneur en matière solide d'au moins 35 % en poids, par rapport au poids total de la peinture de fond, et
II. au moins un revêtement de vernis consistant en un vernis non aqueux ayant une teneur en matière solide d'au moins 50 % en poids, par rapport au poids total du vernis,

**caractérisé en ce que** la peinture de fond et le vernis contiennent chacun 0,5 à 3,0 % en poids, par rapport au poids total de la peinture de fond ou respectivement du vernis,

A. d'au moins un composé de type époxy-acide sulfonique de formule (I)

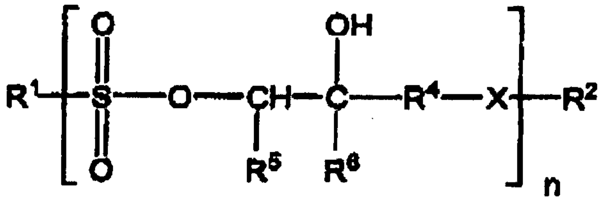

(I),

dans laquelle
n vaut de 1 à 10,
$R^1$ représente un radical alkyle ou alkylène mono- ou divalent ayant de 1 à 18 atomes de carbone ou un radical naphtyle ou phényle mono- ou dialkylé ayant chacun de 1 à 18 atomes de carbone,
$R^5$ et $R^6$ représentent indépendamment l'un de l'autre un atome d'hydrogène ou un radical alkyle ayant de 1 à 12 atomes de carbone ou $R^5$ et $R^6$ représentent ensemble un radical cycloalkyle ayant de 6 à 12 atomes de carbone,
ainsi que soit

a. $R^4$ représente un atome d'hydrogène et les radicaux $R^2$ et X sont absents, soit
b. $R^4$ représente un radical méthylène,
$R^2$ représente un atome d'hydrogène, un radical alkyle mono- ou plurivalent ayant de 1 à 18 atomes de carbone, un radical bisphénol A ou bisphénol F, les radicaux pouvant être substitués, et
X représente un groupe carbonyle ou un atome d'oxygène, X étant optionnel,

le composé selon la formule (I) présentant une masse moléculaire moyenne en nombre de 350 à 2 000 g/mole et pour n > 1 au moins l'un des radicaux $R^1$ et $R^2$ étant au moins divalent, ou
B. d'au moins un composé de type époxy-isocyanate-acide sulfonique bloqué de formule (II)

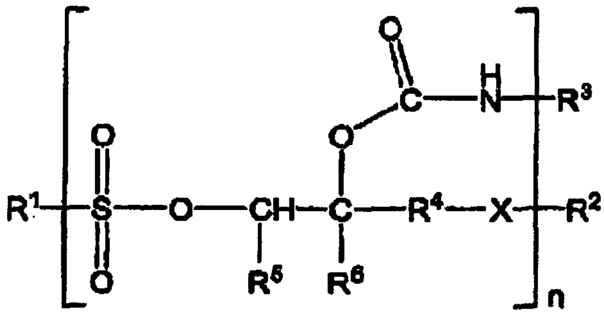

(II),

dans laquelle $R^1$, $R^2$, $R^4$, $R^5$, $R^6$, X et n ont la même signification que dans le composé de formule (I) et
$R^3$ est un radical alkyle, alcényle, cycloalkyle ou aryle ayant de 1 à 18 atomes de carbone ou un radical polymère, qui peuvent être substitués, pour n > 1 au moins l'un des radicaux $R^1$, $R^2$ et $R^3$ étant au moins divalent,
le composé selon la formule (II) ayant une masse moléculaire moyenne en nombre d'au moins 1 000 g/mole.

2. Revêtement de peinture multicouche selon la revendication 1, **caractérisé en ce qu'**au moins une peinture de fond ou un vernis contient au moins un composé de formule (I) ou de formule (II) où n vaut de 1 à 5.

3. Revêtement de peinture multicouche selon l'une quelconque des revendications précédentes, **caractérisé en ce que** la peinture de fond et/ou le vernis contient/ contiennent chacun, indépendamment l'un de l'autre, 1,5 à 3,0 % en poids d'au moins un composé selon la formule (I) et/ou la formule (II), par rapport au poids total de la peinture de fond ou respectivement du vernis.

4. Revêtement de peinture multicouche selon la revendication 1 ou 2, **caractérisé en ce que** la peinture de fond et/ou le vernis contient/contiennent chacun, indépendamment l'un de l'autre, 1,8 à 2,7 % en poids d'au moins un composé selon la formule (I) et/ou la formule (II), par rapport au poids total de la peinture de fond ou respectivement du vernis.

5. Revêtement de peinture multicouche selon l'une quelconque des revendications précédentes, **caractérisé en ce**

**que** la peinture de fond contient en outre

a. 15 - 50 % en poids d'au moins un liant,
b. 5 - 30 % en poids d'au moins un dérivé de résine mélamine en tant qu'agent de réticulation,
c. 0,5 à 49 % en poids d'au moins un agent colorant,
d. 30 - 65 % en poids d'au moins un solvant organique,
e. 0,05 - 40 % en poids d'au moins un adjuvant ou additif,

chaque fois par rapport au poids total de la peinture de fond, les proportions en poids de tous les composants de la peinture de fond faisant au total 100 % en poids.

**6.** Revêtement de peinture multicouche selon la revendication 5, **caractérisé en ce que** la peinture de fond contient comme additif au moins un composant qui est choisi dans le groupe des microparticules de polymère, des particules inorganiques, des cires et des composés cireux.

**7.** Revêtement de peinture multicouche selon l'une quelconque des revendications précédentes, **caractérisé en ce que** le vernis contient en outre

a. 15 - 50 % en poids d'au moins un liant,
b. 5 - 30 % en poids d'au moins un dérivé de résine mélamine en tant qu'agent de réticulation,
c. 30 - 50 % en poids d'au moins un solvant organique,
d. 0,05 - 40 % en poids d'au moins un adjuvant ou additif,

chaque fois par rapport au poids total du vernis, les proportions en poids de tous les composants du vernis faisant au total 100 % en poids.

**8.** Revêtement de peinture multicouche selon l'une quelconque des revendications précédentes, **caractérisé en ce qu'**est compris au moins un autre revêtement de peinture de fond consistant en une peinture de fond ayant une teneur en matière solide d'au moins 35 % en poids, par rapport au poids total de la peinture respective, qui contient un ou plusieurs composés selon la formule (I) et/ou la formule (II), identiques ou différents.

**9.** Revêtement de peinture multicouche selon l'une quelconque des revendications précédentes, **caractérisé en ce qu'**est compris au moins un autre revêtement de peinture de fond consistant en une peinture de fond BI qui ne contient ni composés selon la formule (I) ni composés selon la formule (II).

**10.** Procédé pour la production de revêtements de peinture multicouches selon l'une quelconque des revendications précédentes, **caractérisé en ce qu'**on applique sur un subjectile dans l'ordre

a. d'abord au moins une peinture de fond ayant une teneur en matière solide d'au moins 35 % en poids, par rapport au poids total de la peinture de fond, et ensuite
b. au moins un vernis ayant une teneur en matière solide d'au moins 50 % en poids, par rapport au poids total du vernis,

la peinture de fond et le vernis contenant chacun 0,5 à 3,0% en poids, par rapport au poids total de la peinture de fond ou respectivement du vernis, d'au moins un composé de formule (I) ou d'au moins un composé de formule (II).

**11.** Procédé pour la production de revêtements de peinture multicouches selon la revendication 10, **caractérisé en ce qu'**on applique sur un subjectile dans l'ordre

a. d'abord au moins une peinture de fond BI qui ne contient ni composés selon la formule (I) ni composés selon la formule (II),
b. ensuite au moins une peinture de fond ayant une teneur en matière solide d'au moins 35 % en poids, par rapport au poids total de la peinture de fond, et
c. ensuite au moins un vernis ayant une teneur en matière solide d'au moins 50 % en poids, par rapport au poids total du vernis,

la deuxième peinture de fond et le vernis contenant chacun 0,5 à 3,0 % en poids, par rapport au poids total de la peinture de fond ou respectivement du vernis, d'au moins un composé de formule (I) ou d'au moins un composé

de formule (II).

**12.** Utilisation de composés de type acide sulfonique de formule (I) et/ou de formule (II) selon la revendication 1, en tant que catalyseur aussi bien dans des peintures de fond non aqueuses ayant une teneur en matière solide d'au moins 35 % en poids, par rapport au poids total de la peinture de fond, que dans des vernis non aqueux ayant une teneur en matière solide d'au moins 50 % en poids, par rapport au poids total du vernis, pour la production de revêtements de peinture multicouches.

**13.** Subjectile à base de métal et/ou matière plastique, peint avec le revêtement de peinture multicouche selon l'une quelconque des revendications 1 à 9.

**14.** Utilisation de revêtements de peinture multicouches selon l'une quelconque des revendications 1 à 9, pour la mise en peinture en série d'automobiles, le peinturage de réparation d'automobiles et de véhicules utilitaires, pour le revêtement de pièces de construction pour la construction de bateaux et d'aéronefs ou de pièces de construction pour appareils électriques et ménagers ou éléments de ceux-ci.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006062666 A1
- EP 1940977 A
- US 5288820 A
- US 4369301 A
- US 5112931 A
- EP 0377931 B1
- EP 787159 B
- US 3479328 A
- US 3674838 A
- US 4126747 A
- US 4279833 A
- US 4340497 A
- EP 228003 A
- EP 574417 A
- WO 0125307 A
- WO 0181483 A
- EP 480959 A
- WO 9624619 A
- WO 9942529 A
- EP 1173491 B
- EP 1185568 B
- WO 03089487 A
- WO 03089477 A
- WO 0172909 A
- WO 9942531 A
- WO 2008058590 A
- US 4522958 A


### In der Beschreibung aufgeführte Nicht-Patentliteratur


- Volatile organic compounds. Römpp Lexikon Lacke und Druckfarben. Georg Thieme Verlag, 1998, 612
- Römpp Lexikon Lacke und Druckfarben. Georg Thieme Verlag, 1998, 274-276
- Eisenblau-Pigmente'' bis ''Eisenoxidschwarz. Römpp Lexikon Lacke und Druckfarben. Georg Thieme Verlag, 1998, 180, 181, 451-453
- Pigmente'' bis ''Pigmentvolumenkonzentration. ROMPP LEXIKON LACKE UND DRUCKFARBEN. 563
- Thioindigo-Pigmente. ROMPP LEXIKON LACKE UND DRUCKFARBEN. 567
- Titandioxid-Pigmente. ROMPP LEXIKON LACKE UND DRUCKFARBEN. 400, 467
- Natürlich vorkommende Pigmente. **STICHWORT.** Natürlich vorkommende Pigmente. 459
- Polycyclische Pigmente. ROMPP LEXIKON LACKE UND DRUCKFARBEN. 52
- Azomethinpigmente'', ''Azopigmente. ROMPP LEXIKON LACKE UND DRUCKFARBEN
- Metallkomplex-Pigmente. **STICHWORT.** Metallkomplex-Pigmente. 379
- **JOHAN BIELEMANN.** Lackadditive. Wiley-VCH, 1998
- Ulimanns Enzyklopädie der technischen Chemie. Verlag Chemie, 1983, 3